(19) Europäisches Patentamt
European Patent Office
Office européen des brevets

(11) **EP 4 535 890 A1**

(12) **EUROPEAN PATENT APPLICATION**
published in accordance with Art. 153(4) EPC

(43) Date of publication:
**09.04.2025 Bulletin 2025/15**

(21) Application number: **22943230.7**

(22) Date of filing: **27.05.2022**

(51) International Patent Classification (IPC):
***H04W 72/04*** (2023.01)

(86) International application number:
**PCT/CN2022/095751**

(87) International publication number:
**WO 2023/226032 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **ZHU, Yajun**
**Beijing 100085 (CN)**

(74) Representative: **Dehns Germany Partnerschaft
mbB**
**Theresienstraße 6-8**
**80333 München (DE)**

(54) **RESOURCE DETERMINING METHOD AND APPARATUS, MULTI-CARRIER SCHEDULING
METHOD AND APPARATUS, AND STORAGE MEDIUM**

(57)    The present disclosure provides a resource determining method and apparatus, a multi-carrier scheduling method and apparatus, and a storage medium. The resource determining method comprises: receiving downlink control information (DCI) transmitted by a base station, wherein the DCI is used for scheduling data transmission of a plurality of cells (201); on the basis of a frequency domain resource allocation (FDRA) domain in the DCI, at least determining a frequency domain resource corresponding to a reference cell in the plurality of cells (202); and at least on the basis of the frequency domain resource corresponding to the reference cell, determining frequency domain resources corresponding to other cells in the plurality of cells (203). According to the present disclosure, on the basis of ensuring the DCI scheduling flexibility, the DCI bit overhead can be reduced, the problem of reduced DCI transmission efficiency is effectively avoided, and the availability is high.

```
┌─────────────────────────────────────────────┐
│ Receive DCI sent by a base station, where    │
│ the DCI is configured to schedule data        │── 201
│ transmission for a plurality of cells         │
└─────────────────────────────────────────────┘
                      │
                      ▼
┌─────────────────────────────────────────────┐
│ Determine at least frequency domain resources │
│ corresponding to a reference cell in the      │── 202
│ plurality of cells based on a FDRA field in   │
│ the DCI                                       │
└─────────────────────────────────────────────┘
                      │
                      ▼
┌─────────────────────────────────────────────┐
│ Determine frequency domain resources          │
│ corresponding to one or more other cells in   │── 203
│ the plurality of cells at least based on the  │
│ frequency domain resources corresponding to   │
│ the reference cell                            │
└─────────────────────────────────────────────┘
```

FIG. 2

EP 4 535 890 A1

**Description**

**TECHNICAL FIELD**

The present disclosure relates to the communication field, and in particular to a resource determining method and apparatus, a multi-carrier scheduling method and apparatus, and a storage medium.

**BACKGROUND**

The 5th generation mobile communication technology (5G) new radio (NR) technology operates in a relatively wide spectrum range. With re-fanning of corresponding frequency bands of the existing cellular network, a utilization rate of corresponding spectrums will be steadily improved. But for frequency range1 (FR1), available frequency domain resources are gradually fragmented. In order to meet different spectrum requirements, it is necessary to utilize these scattered spectrum resources in a higher spectrum, power efficiency, and more flexible manner, so as to achieve higher network throughput and good coverage.

Based on relevant mechanisms, one piece of downlink control information (DCI) in an existing serving cell is only allowed to schedule data for one cell. With the gradual fragmentation of frequency resources, the demand for scheduling data for a plurality of cells at the same time will gradually increase. Therefore, it is necessary to introduce the DCI for scheduling the data for the plurality of cells.

In a Release-18 (Rel-18) scenario, a single DCI can schedule three or more cells simultaneously. If a frequency domain resource allocation (FDRA) field in the DCI is simply extended based on methods in the related art, a number of bits occupied by the FDRA field will be significantly increased, thereby increasing bit overheads of the DCI and reducing transmission resources of the DCI.

**SUMMARY**

To overcome the problems existing in related art, embodiments of the present disclosure provides a resource determining method and apparatus, a multi-carrier scheduling method and apparatus, and a storage medium.

According to a first aspect of the embodiments of the present disclosure, there is provided a resource determining method. The method is performed by a terminal and includes:

determining at least frequency domain resources corresponding to a reference cell in the plurality of cells based on a frequency domain resource allocation (FDRA) field in the DCI; and

determining frequency domain resources corresponding to one or more other cells in the plurality of cells at least based on the frequency domain resources corresponding to the reference cell.

Optionally, the FDRA field is configured to indicate:
a first resource indication value (RIV) of the reference cell.

Optionally, determining the at least frequency domain resources corresponding to the reference cell in the plurality of cells based on the FDRA field in the DCI includes:

determining a first start resource block (RB) index value and a first continuous RB number for data transmission for the reference cell based on the first RIV;

where determining the frequency domain resources corresponding to the one or more other cells in the plurality of cells at least based on the frequency domain resources corresponding to the reference cell includes:

determining a second start RB index value for data transmission for a first cell based on the first start RB index value, where the first cell is any one of the one or more other cells; and

determining a second continuous RB number for the data transmission for the first cell based on the second start RB index value and the first continuous RB number.

Optionally, determining the second start RB index value for the data transmission for the first cell based on the first start RB index value includes:

in a case where the first start RB index value is less than a first RB number, determining that the second start RB index value is equal to the first start RB index value, where the first RB number is a number of RBs occupied by a bandwidth part (BWP) configured for the first cell;

in a case where the first start RB index value is greater than or equal to the first RB number, determining that the second start RB index value is equal to a first difference value, where the first difference is a difference between the first RB number and a preset continuous RB number.

Optionally, determining the second continuous RB number for the data transmission for the first cell based on the second start RB index value and the first continuous RB number includes:

in a case where the first continuous RB number is less than or equal to a second difference, determining that the second continuous RB number is equal to the first continuous RB number, where the second difference is a difference between the first RB number and the second start RB index value;
in a case where the first continuous RB number is greater than the second difference, determining that the second continuous RB number is equal to the second difference.

Optionally, determining the frequency domain resources corresponding to the one or more other cells in the plurality of cells at least based on the frequency domain resources corresponding to the reference cell includes:

determining a second RIV of a first cell based on the first RIV and a maximum RIV of the first cell, where the maximum RIV of the first cell is determined based on a number of RBs occupied by a bandwidth part (BWP) configured for the first cell, and the first cell is any one of the one or more other cells; and
determining frequency domain resources for data transmission for the first cell based on the second RIV.

Optionally, determining the second RIV of the first cell based on the first RIV and the maximum RIV of the first cell includes:

in a case where the first RIV is less than or equal to the maximum RIV of the first cell, determining that the second RIV is equal to the first RIV;
in a case where the first RIV is greater than the maximum RIV of the first cell, determining that the second RIV is equal to a preset RIV.

Optionally, the FDRA field is configured to indicate:

a first resource indication value (RIV) of the reference cell; and
a continuous resource block (RB) number for data transmission for each of the one or more other cells.

Optionally, determining the at least frequency domain resources corresponding to the reference cell in the plurality of cells based on the FDRA field in the DCI includes:

determining the first RIV based on a bit value indicated by a bit included in a first bit interval in the FDRA field; and
determining a first start RB index value and a first continuous RB number for data transmission for the reference cell based on the first RIV;
where determining the frequency domain resources corresponding to the one or more other cells in the plurality of cells at least based on the frequency domain resources corresponding to the reference cell includes:
determining a second start RB index value for data transmission for a first cell based on the first start RB index value, where the first cell is any one of the one or more other cells; and
determining a second continuous RB number for the data transmission for the first cell based on a bit value indicated by a bit included in a second bit interval corresponding to the first cell in the FDRA field.

Optionally, determining the second start RB index value for the data transmission for the first cell based on the first start RB index value includes:

in a case where the first start RB index value is less than a first RB number, determining that the second start RB index value is equal to the first start RB index value, where the first RB number is a number of RBs occupied by a bandwidth part (BWP) configured for the first cell;
in a case where the first start RB index value is greater than or equal to the first RB number, determining that the second start RB index value is equal to a first difference value, where the first difference is a difference between the first RB number and a preset continuous RB number.

Optionally, the FDRA field is configured to indicate:

a first resource indication value (RIV) of the reference cell; and

a start resource block (RB) index value for data transmission for each of the one or more other cells.

Optionally, determining the at least frequency domain resources corresponding to the reference cell in the plurality of cells based on the FDRA field in the DCI includes:

determining the first RIV based on a bit value indicated by a bit included in a first bit interval in the FDRA field; and determining a first start RB index value and a first continuous RB number for data transmission for the reference cell based on the first RIV;

where determining the frequency domain resources corresponding to the one or more other cells in the plurality of cells at least based on the frequency domain resources corresponding to the reference cell includes:

determining a second continuous RB number for data transmission for a first cell based on the first continuous RB number, where the first cell is any one of the one or more other cells; and

determining a second start RB index value for the data transmission for the first cell based on a bit value indicated by a bit included in a second bit interval corresponding to the first cell in the FDRA field.

Optionally, determining the second continuous RB number for the data transmission for the first cell based on the first continuous RB number includes:

in a case where the first continuous RB number is less than or equal to a first RB number, determining that the second continuous RB number is equal to the first continuous RB number, where the first RB number is a number of RBs occupied by a bandwidth part (BWP) configured for the first cell;

in a case where the first continuous RB number is greater than the first RB number, determining that the second continuous RB number is equal to the first RB number.

Optionally, in the FDRA field, the first bit interval is before other bit intervals;

in a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell.

Optionally, the first bit interval occupies a first bit number of bits;

where the first bit number is equal to a minimum bit number that needs to be occupied when indicating all optional values of the first RIV.

Optionally, the second bit interval occupies a second bit number of bits;

where the second bit number is equal to a minimum bit number that needs to be occupied when indicating all optional values of the second start RB index value or all optional values of the second continuous RB number.

Optionally, the method further includes any one of:

taking a cell receiving the DCI among the plurality of cells as the reference cell;

taking a cell with a largest number of resource blocks (RBs) occupied by a configured bandwidth part (BWP) among the plurality of cells as the reference cell;

taking a cell with a smallest number of RBs occupied by a configured BWP among the plurality of cells as the reference cell;

taking a cell with a largest cell index number among the plurality of cells as the reference cell; or

taking a cell with a smallest cell index number among the plurality of cells as the reference cell.

According to a second aspect of the embodiments of the present disclosure, there is provided a multi-carrier scheduling method. The method is performed by a base station and includes:

determining frequency domain resources for data transmission of a terminal in each of a plurality of cells;

determining a bit value indicated by a bit included in a frequency domain resource allocation (FDRA) field in downlink control information (DCI) at least based on frequency domain resources corresponding to a reference cell in the plurality of cells; and

sending the DCI to the terminal.

Optionally, determining the frequency domain resources for the data transmission of the terminal in each of the plurality of cells includes:

determining a first start resource block (RB) index value and a first continuous RB number for data transmission of the terminal in the reference cell;
determining a second start RB index value for data transmission of the terminal in a first cell based on the first start RB index value, where the first cell is any one of one or more other cells in the plurality of cells; and
determining a second continuous RB number for the data transmission of the terminal in the first cell based on the second start RB index value and the first continuous RB number.

Optionally, determining the second start RB index value for the data transmission of the terminal in the first cell based on the first start RB index value includes:

in a case where the first start RB index value is less than a first RB number, determining that the second start RB index value is equal to the first start RB index value, where the first RB number is a number of RBs occupied by a bandwidth part (BWP) configured for the first cell;
in a case where the first start RB index value is greater than or equal to the first RB number, determining that the second start RB index value is equal to a first difference value, where the first difference is a difference between the first RB number and a preset continuous RB number.

Optionally, determining the second continuous RB number for the data transmission of the terminal in the first cell based on the second start RB index value and the first continuous RB number includes:

in a case where the first continuous RB number is less than or equal to a second difference, determining that the second continuous RB number is equal to the first continuous RB number, where the second difference is a difference between the first RB number and the second start RB index value;
in a case where the first continuous RB number is greater than the second difference, determining that the second continuous RB number is equal to the second difference.

Optionally, determining the frequency domain resources for the data transmission of the terminal in each of the plurality of cells includes:

determining a first resource indication value (RIV) of the terminal in the reference cell;
determining a second RIV of a first cell based on the first RIV and a maximum RIV of the first cell, where the maximum RIV of the first cell is determined based on a number of RBs occupied by a bandwidth part (BWP) configured for the first cell, and the first cell is any one of one or more other cells in the plurality of cells; and
determine frequency domain resources for data transmission for the first cell based on the second RIV.

Optionally, determining the second RIV of the first cell based on the first RIV and the maximum RIV of the first cell includes:

in a case where the first RIV is less than or equal to the maximum RIV of the first cell, determining that the second RIV is equal to the first RIV;
in a case where the first RIV is greater than the maximum RIV of the first cell, determining that the second RIV is equal to a preset RIV.

Optionally, the FDRA field is configured to indicate:

a first resource indication value (RIV) of the reference cell;
where determining the bit value indicated by the bit included in the FDRA field in the DCI at least based on the frequency domain resources corresponding to the reference cell in the plurality of cells includes:
determining the bit value indicated by the bit included in the FDRA field based on the first RIV, where the first RIV is associated with the first start RB index value and the first continuous RB number for the reference cell.

Optionally, determining the frequency domain resources for the data transmission of the terminal in each of the plurality of cells includes:

determining a first start resource block (RB) index value and a first continuous RB number for data transmission of the terminal in the reference cell;
determining a second start RB index value for data transmission of the terminal in a first cell based on the first start RB index value, where the first cell is any one of one or more other cells in the plurality of cells; and
determining a second continuous RB number for the data transmission of the terminal in the first cell.

Optionally, determining the second start RB index value for the data transmission of the terminal in the first cell based on the first start RB index value includes:

in a case where the first start RB index value is less than a first RB number, determining that the second start RB index value is equal to the first start RB index value, where the first RB number is a number of RBs occupied by a bandwidth part (BWP) configured for the first cell;
in a case where the first start RB index value is greater than or equal to the first RB number, determining that the second start RB index value is equal to a first difference value, where the first difference is a difference between the first RB number and a preset continuous RB number.

Optionally, the FDRA field is configured to indicate:

a first resource indication value (RIV) of the reference cell; and
a continuous RB number for data transmission for each of the one or more other cells;
where determining the bit value indicated by the bit included in the FDRA field in the DCI at least based on the frequency domain resources corresponding to the reference cell in the plurality of cells includes:
determining a bit value indicated by a bit included in a first bit interval in the FDRA field based on the first RIV, where the first RIV is associated with the first start RB index value and the first continuous RB number; and
determining a bit value indicated by a bit included in a second bit interval corresponding to the first cell in the FDRA field based on the second continuous RB number.

Optionally, determining the frequency domain resources for the data transmission of the terminal in each of the plurality of cells includes:

determining a first start resource block (RB) index value and a first continuous RB number for data transmission of the terminal in the reference cell;
determining a second continuous RB number for data transmission of the terminal in a first cell based on the first continuous RB number, where the first cell is any one of one or more other cells in the plurality of cells; and
determining a second start RB index value for the data transmission of the terminal in the first cell.

Optionally, determining the second continuous RB number for the data transmission of the terminal in the first cell based on the first continuous RB number includes:

in a case where the first continuous RB number is less than or equal to a first RB number, determining that the second continuous RB number is equal to the first continuous RB number, where the first RB number is a number of RBs occupied by a bandwidth part (BWP) configured for the first cell;
in a case where the first continuous RB number is greater than the first RB number, determining that the second continuous RB number is equal to the first RB number.

Optionally, the FDRA field is configured to indicate:

a first resource indication value (RIV) of the reference cell; and
a start RB index value for data transmission for each of the one or more other cells;
where determining the bit value indicated by the bit included in the FDRA field in the DCI at least based on the frequency domain resources corresponding to the reference cell in the plurality of cells includes:

determining a bit value indicated by a bit included in a first bit interval in the FDRA field based on the first RIV, where the first RIV is associated with the first start RB index value and the first continuous RB number; and
determining a bit value indicated by a bit included in a second bit interval corresponding to the first cell in the FDRA field based on the second start RB index value.

Optionally, in the FDRA field, the first bit interval is before other bit intervals;
in a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell.
Optionally, the first bit interval occupies a first bit number of bits;
where the first bit number is equal to a minimum bit number that needs to be occupied when indicating all optional values of the first RIV.

Optionally, the second bit interval occupies a second bit number of bits; where the second bit number is equal to a minimum bit number that needs to be occupied when indicating all optional values of the second start RB index value or all optional values of the second continuous RB number.

Optionally, the method further includes any one of:

taking a cell receiving the DCI among the plurality of cells as the reference cell;
taking a cell with a largest number of resource blocks (RBs) occupied by a configured bandwidth part (BWP) among the plurality of cells as the reference cell;
taking a cell with a smallest number of RBs occupied by a configured BWP among the plurality of cells as the reference cell;
taking a cell with a largest cell index number among the plurality of cells as the reference cell; or
taking a cell with a smallest cell index number among the plurality of cells as the reference cell.

According to a third aspect of the embodiments of the present disclosure, there is provided a resource determining apparatus. The apparatus is applied to a terminal and includes:

a receiving module, configured to receive downlink control information (DCI) sent by a base station, where the DCI is configured to schedule data transmission for a plurality of cells;
a first determining module, configured to determine at least frequency domain resources corresponding to a reference cell in the plurality of cells based on a frequency domain resource allocation (FDRA) field in the DCI; and
a second determining module, configured to determine frequency domain resources corresponding to one or more other cells in the plurality of cells at least based on the frequency domain resources corresponding to the reference cell.

According to the fourth aspect of the embodiments of the present disclosure, there is provided a multi-carrier scheduling apparatus. The apparatus is applied to a base station and includes:

a third determining module, configured to determine frequency domain resources for data transmission of a terminal in each of a plurality of cells;
a fourth determining module, configured to determine a bit value indicated by a bit included in a frequency domain resource allocation (FDRA) field in downlink control information (DCI) at least based on frequency domain resources corresponding to a reference cell in the plurality of cells; and
a sending module, configured to send the DCI to the terminal.

According to the fifth aspect of the embodiments of the present disclosure, there is provided a computer-readable storage medium storing a computer program for executing any of the resource determining methods described above on the terminal side.

According to the sixth aspect of the embodiments of the present disclosure, there is provided a computer-readable storage medium storing a computer program for executing any of the multi-carrier scheduling methods described above on the base station side.

According to the seventh aspect the embodiments of the present disclosure, there is provided a resource determining apparatus, including:

one or more processors; and
a memory configured to store instructions executable by the one or more processors;
where the processors are configured to perform any of the resource determining methods described above on the terminal side.

According to the eighth aspect of the embodiments of the present disclosure, there is provided a multi-carrier scheduling apparatus, including:

one or more processors; and
a memory configured to store instructions executable by the one or more processors;
where the processors are configured to perform any of the multi-carrier scheduling methods described above on the base station side.

The technical solutions provided by the embodiments of the present disclosure may include the following beneficial effects.

In the embodiments of the present disclosure, the terminal can receive DCI sent by the base station for scheduling data transmission of the plurality of cells, determine at least frequency domain resources corresponding to the reference cell in the plurality of cells based on the FDRA field in the DCI; and further determine frequency domain resources corresponding to one or more other cells in the plurality of cells at least based on the frequency domain resources corresponding to the reference cell. According to the present disclosure, bit overheads of the DCI can be reduced on the basis of ensuring scheduling flexibility of the DCI, thereby effectively avoiding the problem that the transmission efficiency of the DCI is reduced and having the high availability.

It should be understood that the general description above and the detailed description in the following text are only exemplary and explanatory, and cannot limit the present disclosure.

## BRIEF DESCRIPTION OF THE DRAWINGS

The accompanying drawings, which are incorporated in and constitute a part of the specification, illustrate embodiments in accordance with the present disclosure and together with the specification, serve to explain principles of the disclosure.

FIG. 1A is a schematic diagram of scheduling physical downlink shared channels (PDSCHs) of a plurality of cells via a single DCI according to an exemplary embodiment of the present disclosure.

FIG. 1B is a schematic diagram of frequency domain resources corresponding to scheduling data transmission for three cells via a single DCI according to an exemplary embodiment of the present disclosure.

FIG. 2 is a flowchart of a resource determining method according to an exemplary embodiment of the present disclosure.

FIG. 3A is a flowchart of another resource determining method according to an exemplary embodiment of the present disclosure.

FIG. 3B is a flowchart of another resource determining method according to an exemplary embodiment of the present disclosure.

FIG. 4 is a flowchart of another resource determining method according to an exemplary embodiment of the present disclosure.

FIG. 5A is a flowchart of another resource determining method according to an exemplary embodiment of the present disclosure.

FIG. 5B is a flowchart of another resource determining method according to an exemplary embodiment of the present disclosure.

FIG. 6A is a flowchart of another resource determining method according to an exemplary embodiment of the present disclosure.

FIG. 6B is a flowchart of another resource determining method according to an exemplary embodiment of the present disclosure.

FIG. 7 is a flowchart of a multi-carrier scheduling method according to an exemplary embodiment of the present disclosure.

FIG. 8 is a block diagram of a resource determining apparatus according to an exemplary embodiment of the present disclosure.

FIG. 9 is a block diagram of a multi-carrier scheduling apparatus according to an exemplary embodiment of the present disclosure.

FIG. 10 is a schematic structural diagram of a resource determining apparatus according to an exemplary embodiment of the present disclosure.

FIG. 11 is a schematic structural diagram of a multi-carrier scheduling apparatus according to an exemplary embodiment of the present disclosure.

## DETAILED DESCRIPTION OF THE EMBODIMENTS

The exemplary embodiments will be described in detail herein, and examples thereof are shown in accompanying drawings. When the following descriptions refer to the accompanying drawings, unless otherwise indicated, the same numbers in different drawings represent the same or similar elements. The implementations described in the following exemplary embodiments do not represent all the implementations consistent with the embodiments of the present disclosure. Rather, they are merely examples of the apparatus and method consistent with some aspects of the embodiments of the present disclosure as detailed in the appended claims.

Terms used in the embodiments of the present disclosure are for the purpose of describing specific embodiments only, and are not intended to limit the embodiments of the present disclosure. The singular forms "a", "an" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, and the like may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of", "when" or "in response to determining".

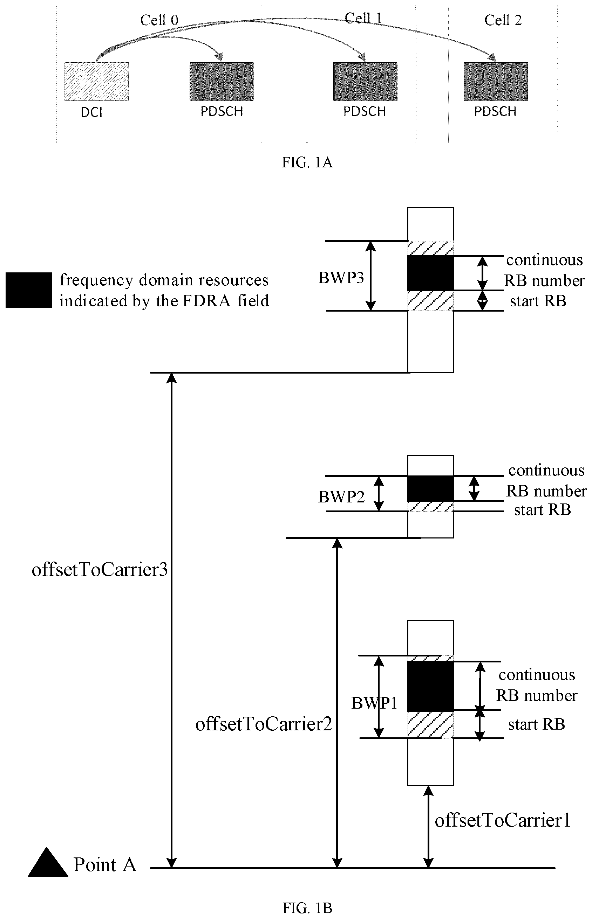

Based on relevant mechanisms, one piece of downlink control information (DCI) in a scheduling cell is only allowed to schedule data transmission for one cell, that is, only a physical uplink shared channel (PUSCH) or a physical downlink shared channel (PDSCH) of one cell is allowed to be scheduled. With the gradual fragmentation of frequency resources, the demand for scheduling data for a plurality of cells at the same time will gradually increase. Meanwhile, in order to reduce control signaling overheads, Rel-18 work item description (WID) supports scheduling PDSCHs or PUSCHs of a plurality of cells via a single DCI. It should be noted that each cell corresponds to one PDSCH and one PUSCH. For example, scheduling the PDSCHs of the plurality of cells using the single DCI can be shown in FIG. 1A.

In a scenario that the single DCI schedules multi-cell data transmission, it is an urgent problem to reduce overheads of the DCI as much as possible on the basis of ensuring scheduling flexibility. A frequency domain resource allocation (FDRA) field is used to indicate frequency domain resources of transmission data. In a scenario design of scheduling two cells using the single DCI, it is proposed that the FDRA field of the DCI can be simply extended, that is, frequency domain information of scheduling data for the two cells is indicated based on different bits.

If the single DCI can schedule three or more cells at the same time and the FDRA field is still simply extended based on the above method, a number of bits occupied by the FDRA field will be significantly increased, thereby increasing bit overheads of the DCI.

Taking that the single DCI schedules three cells and a number of resource blocks (RBs) occupied by a bandwidth part (BWP) configured for each of the three cells is equal to 100 as an example, if the three cells correspond to a FDRA field based on resource type 1 (type 1), the number of bits occupied by the corresponding FDRA field is 39, thereby greatly increasing overheads of the DCI and reducing transmission resources of the DCI.

For a FDRA field resource mapping type of type 1, a resource indication value (RIV) corresponding to the FDRA field is associated with a start RB ($RB_{start}$) and a continuous RB length ($L_{RBs}$) of the frequency domain resources corresponding to the transmitting data. For a downlink resource allocation of type 1 except for DCI format 1_0 and DCI format 1_2 in a common search space (CSS), an association between the RIV indicated by the FDRA field with $RB_{start}$ and $L_{RBs}$ is shown in following formulas:

$$\text{if } (L_{RBs} - 1) \leq \lfloor N_{BWP}^{size}/2 \rfloor, \text{ then}$$

$$RIV = N_{BWP}^{size}(L_{RBs} - 1) + RB_{start} \qquad \text{formula 1}$$

$$\text{else}$$

$$RIV = N_{BWP}^{size}\left(N_{BWP}^{size} - L_{RBs} + 1\right) + \left(N_{BWP}^{size} - 1 - RB_{start}\right) \qquad \text{formula 2}$$

where $1 \leq L_{RBs} \leq N_{BWP}^{size} - RB_{start}$, and $N_{BWP}^{size}$ represents a number of RBs occupied by a configured BWP.

If a resource block group (RBG) is used as a granularity of the type1 resource, an association between the RIV corresponding to the FDRA field with a start RBG ($RBG_{start}$) and a continuous RBG length ($L_{RBGs}$) of the frequency domain resources corresponding to the transmitting data is as follows:

$$\text{if } (L_{RBGs} - 1) \leq \lfloor N_{RBG}/2 \rfloor, \text{ then}$$

$$RIV = N_{RBG}(L_{RBGs} - 1) + RBG_{start} \qquad \text{formula 3}$$

$$\text{else}$$

$$RIV = N_{RBG}(N_{RBG} - L_{RBGs} + 1) + (N_{RBG} - 1 - RBG_{start}) \qquad \text{formula 4}$$

where $1 \leq L_{RBGs} \leq N_{RBG} - RBG_{start}$, and $N_{RBG}$ represents a number of RBGs occupied by the configured BWP.

In embodiments of the present disclosure, a schematic diagram of frequency domain resources corresponding to scheduling data transmission for three cells via a single DCI is shown in FIG. 1B. In FIG. 1B, offsets of start RBs of carriers corresponding to three cells relative to a designated reference point (point A) are offsetToCarrier1, offsetToCarrier2 and offsetToCarrier3, respectively. Configured BWPs of the three cells on the frequency domain resources are BWP1, BWP2 and BWP3, respectively. If the data transmission for the three cells is simultaneously scheduled via the single DCI, it is necessary to indicate frequency domain resources of the data transmission for the three cells via the FDRA field in the DCI, that is, a start RB index values and a continuous RB number on a corresponding configured BWP. For scheduling multi-cell DCI, if the FDRA field corresponding to type 1 is simply extended to indicate the frequency domain resource of the data transmission for each cell, respectively, bit overheads of the DCI will be greatly increased and the transmission efficiency of the DCI will be reduced.

In order to solve the above technical problems, the present disclosure provides a resource determining method and apparatus, a multi-carrier scheduling method and apparatus, and a storage medium, which can reduce bit overheads of the DCI on the basis of ensuring scheduling flexibility of the DCI, thereby effectively avoiding the problem that the transmission efficiency of the DCI is reduced and having the high availability.

Hereinafter, the resource determining method provided by the present disclosure will be described on a terminal side.

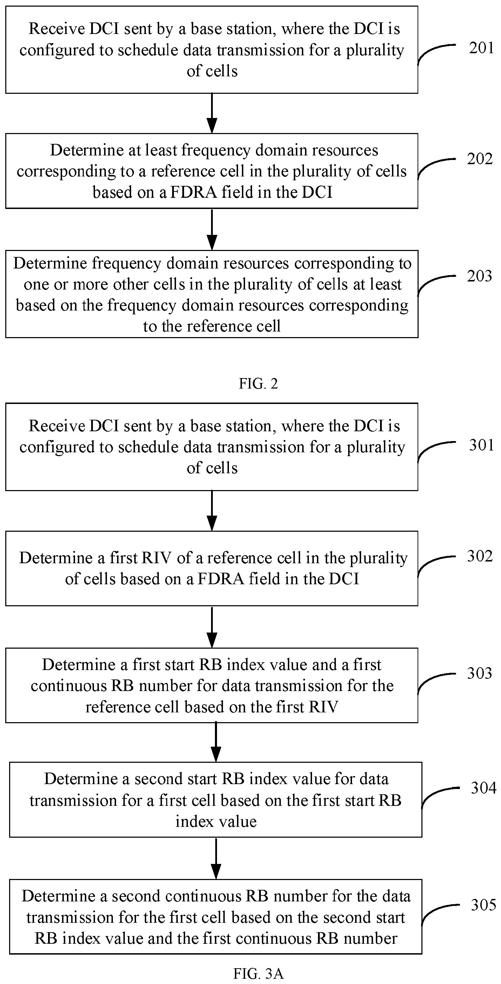

An embodiment of the present disclosure provides a resource determining method. As shown in FIG. 2, FIG. 2 is a flowchart of a resource determining method according to an embodiment. The method can be performed by a terminal. The method can include steps 201 to 203.

In step 201, downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 202, at least frequency domain resources corresponding to a reference cell in the plurality of cells are determined based on a frequency domain resource allocation (FDRA) field in the DCI.

The reference cell can be indicated by the base station through signaling, or the reference cell can be determined through protocol agreements.

In one possible implementation, a cell receiving the DCI among the plurality of cells can be taken as the reference cell.

In another possible implementation, a cell with a largest number of resource blocks (RBs) occupied by a configured bandwidth part (BWP) among the plurality of cells can be taken as the reference cell.

In another possible implementation, a cell with a smallest number of RBs occupied by a configured BWP among the plurality of cells can be taken as the reference cell.

In another possible implementation, a cell with a largest cell index number among the plurality of cells can be taken as the reference cell.

In another possible implementation, a cell with a smallest cell index number among the plurality of cells can be taken as the reference cell.

The above is only an exemplary explanation, and the method of determining the reference cell among the plurality of cells in practical applications should be within the protection scope of the present disclosure.

In step 203, frequency domain resources corresponding to one or more other cells in the plurality of cells are determined at least based on the frequency domain resources corresponding to the reference cell.

In an embodiment of the present disclosure, one or more other cells in plurality of cells may refer to one or more other cells scheduled by the DCI except for the reference cell. The number of other cells can be one or more, which is not limited in the present disclosure.

In the above embodiments, bit overheads of the DCI can be reduced on the basis of ensuring scheduling flexibility of the DCI, thereby effectively avoiding the problem that the transmission efficiency of the DCI is reduced and having the high availability.

In some optional embodiments, the FDRA field in the DCI can be configured to indicate a first resource indication value (RIV) of the reference cell.

Correspondingly, the specific manner to determine frequency domain resources corresponding to one or more other cells is as follows.

Method 1-1: based on the first RIV of the reference cell, a first start resource block (RB) index value and a first continuous RB number for data transmission for the reference cell are determined (the continuous RB number can also be referred to as a consecutive RB number, that is, a number of RBs continuously occupied from a start RB). Further, based on the first start RB index value and the first continuous RB number of the reference cell, the frequency domain resources of the one or more other cells are determined.

Referring to FIG. 3A, FIG. 3A is a flowchart of a resource determining method according to an embodiment, which can applied to a terminal. The method can include steps 301 to 305.

In step 301, downlink control information (DCI) sent by a base station is received, where the DCI is configured to schedule data transmission for a plurality of cells.

In an embodiment of the present disclosure, the DCI is configured to schedule data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 302, a first resource indication value (RIV) of a reference cell in the plurality of cells is determined based on a frequency domain resource allocation (FDRA) field in the DCI.

In an embodiment of the present disclosure, the terminal can determine the first RIV based on bit values indicated by all bits included in the FDRA field.

In step 303, a first start resource block (RB) index value and a first continuous RB number for data transmission for the reference cell are determined based on the first RIV.

In an embodiment of the present disclosure, the first start RB index value $RB_{start,ref}$ and the first continuous RB number $L_{RBs,ref}$ for data transmission for the reference cell can be determined based on a corresponding relationship among the first RIV, formula 1, and formula 2 mentioned above.

In step 304, a second start RB index value for data transmission for a first cell is determined based on the first start RB index value.

In an embodiment of the present disclosure, the first cell is any one of one or more other cells in the plurality of cells except for the reference cell.

In an embodiment of the present disclosure, the first start RB index value $RB_{start,ref}$ and the first continuous RB number $L_{RBs,ref}$ of the reference cell can be used as references for determining start RB index values and continuous RB numbers of the one or more other cells, respectively.

If the first start RB index value $RB_{start,ref}$ satisfies the following constraint: $RB_{start,ref} = 0, 1, 2, ..., (N_{BWP}^{size,c1} - 1)$, it can be determined that the second start RB index value $RB_{start,c1}$ of the first cell is equal to the first start RB index value $RB_{start,ref}$. The first cell is any one of the one or more other cells.

If the first start RB index value does not satisfies the above constraint, it can be determined that the second start RB index value $RB_{start,c1}$ of the first cell is equal to a first difference value. The first difference value is a difference between a first RB number $N_{BWP}^{size,c1}$ and a preset continuous RB number N, that is, $RB_{start,c1} = N_{BWP}^{size,c1} - N$.

The specific implementation is as follows.

In one possible implementation, a number of RBs occupied by a BWP configured for the first cell is $N_{BWP}^{size,c1}$, and a range of optional RB index values of the first cell is $0, 1, 2, ... (N_{BWP}^{size,c1} - 1)$. If the first start RB index value $RB_{start,ref}$ of the reference cell belongs to the above range of the optional RB index values, that is, the first start RB index value $RB_{start,ref}$ is less than the first RB number $N_{BWP}^{size,c1}$, that is, $RB_{start,ref}$ satisfies: $RB_{start,ref} = 0, 1, 2, ..., (N_{BWP}^{size,c1} - 1)$, then the first start RB index value $RB_{start,ref}$ of the reference cell can be directly used as the second start RB index value $RB_{start,c1}$ for the data transmission for the first cell. The terminal can determine that the second start RB index value $RB_{start,c1}$ for the data transmission for the first cell is equal to the first start RB index value $RB_{start,ref}$. That is, $RB_{start,c1} = RB_{start,ref}$.

For example, if the first RB number $N_{BWP}^{size,c1}$ is 4, the first start RB index value $RB_{start,ref}$ is 2, and the first start RB index value $RB_{start,ref}$ is less than the first RB number $N_{BWP}^{size,c1}$, that is, $RB_{start,ref}$ satisfies the following constraint: $RB_{start,ref} = 0, 1, 2, 3$. In this case, the second start RB index value $RB_{start,c1}$ is equal to the first start RB index value $RB_{start,ref}$, which is also 2.

In another possible implementation, if the first start RB index value $RB_{start,ref}$ is greater than or equal to the first RB number $N_{BWP}^{size,c1}$, that is, the first start RB index value $RB_{start,ref}$ of the reference cell does not belong to the above range of the optional RB index values, and $RB_{start,ref}$ does not satisfy: $RB_{start,ref} = 0, 1, 2, ..., (N_{BWP}^{size,c1} - 1)$, then the first start RB index value $RB_{start,ref}$ of the reference cell cannot be directly used as the second start RB index value $RB_{start,c1}$ for the data transmission for the first cell. In this case, the terminal can determine that the second start RB index value $RB_{start,c1}$ is equal to the first difference value, where the first difference value is a difference between the first RB number $N_{BWP}^{size,c1}$ and the preset continuous RB number N, i.e., $RB_{start,c1} = N_{BWP}^{size,c1} - N$.

The preset continuous RB number N can be indicated by the base station or agreed by a protocol. The preset continuous RB number N is a positive integer.

In one possible implementation, the preset continuous RB number can be 1, ensuring that the preset continuous RB number does not exceed the first RB number $N_{BWP}^{size,c1}$.

For example, if the first RB number $N_{BWP}^{size,c1}$ is 4 and the first start RB index value $RB_{start,ref}$ is 4, then the first start RB index value $RB_{start,ref}$ is equal to the first RB number. If the preset continuous RB number is 1, the terminal can determine that the second start RB index value $RB_{start,c1} = N_{BWP}^{size,c1} - 1 = 3$.

In step 305, a second continuous RB number for the data transmission for the first cell is determined based on the second start RB index value and the first continuous RB number.

In an embodiment of the present disclosure, the first continuous RB number is a positive integer.

In an embodiment of the present disclosure, after determining the second start RB index value $RB_{start,c1}$ of the first cell, the second start RB index value $RB_{start,c1}$ and the first continuous RB number $L_{RBs, ref}$ can be used as references to jointly determine the second continuous RB number $L_{RBS, ref}$ of the first cell.

If $L_{RBs, ref}$ satisfies the following constraint: $1 \leq L_{RBs, ref} \leq N_{BWP}^{size,c1} - RB_{start,c1}$, the terminal can directly determine the second continuous RB number $L_{RBs,ref} = L_{RBs, ref}$.

If $L_{RBS, ref}$ does not satisfy the above constraint, the terminal can determine that $L_{RBS, c1} = N_{BWP}^{size,c1} - RB_{start,c1}$. The specific implementation is as follows.

In one possible implementation, if the first continuous RB number $L_{RBs, ref}$ is less than or equal to a second difference, where the second difference is a difference between the first RB number $N_{BWP}^{size,c1}$ and the second start RB index value $RB_{start,c1}$, that is, the first continuous RB number $L_{RBs, ref}$ satisfies: $1 \leq L_{RBs, ref} \leq N_{BWP}^{size,c1} - RB_{start,c1}$, the terminal can determine that the second continuous RB number $L_{RBs, c1}$ is equal to the first continuous RB number $L_{RBS, ref}$, that is, $L_{RBS, c1} = L_{RBS, ref}$.

For example, if the second start RB index value $RB_{start,c1}$ has already been determined according to the above step 303, the terminal can determine the second difference value based on the difference between the first RB number $N_{BWP}^{size,c1}$ and the second start RB index value $RB_{start,c1}$. Assuming that the second difference value is 3, the first continuous RB number $L_{RBs, ref}$ is 2, and the first continuous RB number $L_{RBs, ref}$ satisfies: $1 \leq L_{RBs, ref} \leq N_{BWP}^{size,c1} - RB_{start,c1}$, then the second continuous RB number $L_{RBs, c1}$ is equal to the first continuous RB number $L_{RBs, ref}$, and $L_{RBs, c1} = L_{RBs, ref} = 2$.

In another possible implementation, if the first continuous RB number $L_{RBs, ref}$ is greater than the second difference, the terminal can determine that the second continuous RB number $L_{RBs, c1}$ is equal to the second difference calculated above, that is, $L_{RBs, c1} = N_{BWP}^{size,c1} - RB_{start,c1}$.

For example, if the second start RB index value $RB_{start,c1}$ has already been determined, the second difference can be determined based on the difference between the first RB number $N_{BWP}^{size,c1}$ and the second start RB index value $RB_{start,c1}$. Assuming that the second difference is 1 and the first continuous RB number $L_{RBs, ref}$ is 2, then the second continuous RB number $L_{RBs, c1}$ is equal to the second difference, and $L_{RBs, c1} = N_{BWP}^{size,c1} - RB_{start,c1} = 1$.

In the above embodiment, the terminal can determine the first RIV of the reference cell based on the FDRA field. Based on the first RIV, the first start RB index value and the first continuous RB number of the reference cell can be determined. Further, the terminal can determine the second start RB index value for the data transmission for the first cell based on the first start RB index value, and determine the second continuous RB number for the data transmission for the first cell based on the second start RB index value and the first continuous RB number. On the basis of ensuring scheduling flexibility of the DCI, the FDRA field in the DCI is only used to indicate the first RIV of the reference cell, reducing bit overheads of the DCI, effectively avoiding the problem that the transmission efficiency of the DCI is reduced, and having the high availability.

By using the above method to design rules for the FDRA field in the DCI, RB start positions and continuous RB numbers of the one or more other cells are determined based on the reference cell. Another method will be provided as below, so that frequency domain start positions and sizes of continuous frequency domain ranges of the one or more other cells can be determined based on the reference cell.

Method 1-2: based on the first RIV of the reference cell, the terminal can determine a first start RB index value and a first continuous RB number for data transmission for the reference cell (the continuous RB number can also be referred to as a consecutive RB number, that is, a number of RBs continuously occupied from a start RB). Further, the terminal can determine frequency domain resources of one or more other cells based on the first start RB index value and the first continuous RB number of the reference cell, a sub-carrier space (SCS) of the reference cell, and SCSs of the one or more other cells.

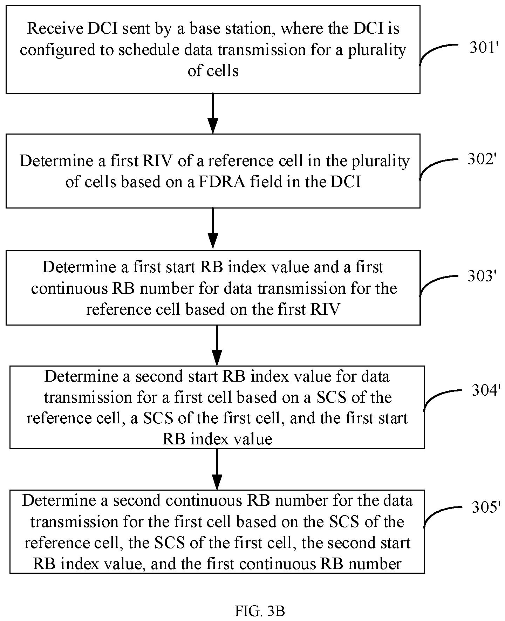

Referring to FIG. 3B, FIG. 3B is a flowchart of a resource determining method according to an embodiment, which can be applied to a terminal. The method can include steps 301' to 305'.

In step 301', downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 302', a first resource indication value (RIV) of a reference cell in the plurality of cells is determined based on a frequency domain resource allocation (FDRA) field in the DCI.

In an embodiment of the present disclosure, the terminal can determine the first RIV based on bit values indicated by all bits included in the FDRA field.

In step 303', a first start resource block (RB) index value and a first continuous RB number for data transmission for the reference cell are determined based on the first RIV.

The implementation of step 303' is similar to that of step 303 mentioned above and will not be repeated here.

In step 304', a second start RB index value for data transmission for a first cell is determined based on a sub-carrier space (SCS) of the reference cell, a SCS of the first cell, and the first start RB index value.

In an embodiment of the present disclosure, the first cell is any one of one or more other cells in the plurality of cells. The manner of determining the second start RB index value is similar to step 304. In addition, in an embodiment of the present disclosure, the influence of the SCS is also considered. The specific implementation is as follows.

In one possible implementation, if a frequency point size $RB_{start,ref}\mu_{ref}/\mu_{c1}$ corresponding to the first start RB index value is smaller than a first RB number $N_{BWP}^{size,c1}$, i.e., $RB_{start,ref}\mu_{ref}/\mu_{c1} = 0, 1, 2, ..., (N_{BWP}^{size,c1} - 1)$, then the terminal can determine that the second start RB index value for the data transmission for the first cell $RB_{start,c1} = RB_{start, ref}\mu_{ref}/\mu_{c1}$. The first RB number $N_{BWP}^{size,c1}$ can represent a number of RBs occupied by a BWP configured for the first cell, $\mu_{ref}$ represents the SCS of the reference cell, and $\mu_{c1}$ represents the SCS of the first cell.

In another possible implementation, if the frequency point size $RB_{start,ref}\mu_{ref}/\mu_{c1}$ corresponding to the first start RB index value is greater than or equal to the first RB number $N_{BWP}^{size,c1}$, the terminal can determine that the second start RB index value $RB_{start,c1} = (N_{BWP}^{size,c1} - N)\mu_{ref}/\mu_{c1}$. N represents a preset continuous RB number, $\mu_{ref}$ represents the SCS of the reference cell, and $\mu_{c1}$ represents the SCS of the first cell.

In step 305', a second continuous RB number for the data transmission for the first cell is determined based on the SCS of the reference cell, the SCS of the first cell, the second start RB index value, and the first continuous RB number.

In an embodiment of the present disclosure, the first continuous RB number is a positive integer. The manner of determining the second continuous RB number for the data transmission for the first cell is similar to step 305. In addition, in an embodiment of the present disclosure, the influence of the SCS is also considered. The specific implementation is as follows.

In one possible implementation, if a frequency domain range size $L_{RBs, ref}\mu_{ref}/\mu_{c1}$ corresponding to the first continuous RB number is less than or equal to a second difference value, i.e., $1 \leq L_{RBs, ref}\mu_{ref}/\mu_{c1} \leq N_{BWP}^{size,c1} - RB_{start,c1}$, where the second difference is a difference between the first RB number $N_{BWP}^{size,c1}$ and the second start RB index value . In this case, the terminal can determine that the second continuous RB number $L_{RBs, c1} = L_{RBs, ref}\mu_{ref}/\mu_{c1}$, where $\mu_{ref}$ represents the SCS of the reference cell, and $\mu_{c1}$ represents the SCS of the first cell.

In another possible implementation, if the frequency domain range size $L_{RBs, ref}\mu_{ref}/\mu_{c1}$ corresponding to the first continuous RB number is greater than the second difference, the terminal can determine that the second continuous RB number $L_{RBs,\,c1}=N_{BWP}^{size,c1}-RB_{start,c1}$, where $\mu_{ref}$ represents the SCS of the reference cell, and $\mu_{c1}$ represents the SCS of the first cell.

In the above embodiment, the terminal can determine frequency domain resources corresponding to other cells based on the above manner. On the basis of ensuring scheduling flexibility of the DCI, the FDRA field in the DCI is only used to indicate the first RIV of the reference cell, reducing bit overheads of the DCI, effectively avoiding the problem that the transmission efficiency of the DCI is reduced, and having the high availability.

Method 2: RIVs of one or more other cells are determined based on the first RIV of the reference cell and maximum RIVs of the one or more other cells, and frequency domain resources for data transmission for the one or more other cells are determined based on the RIVs of the one or more other cells.

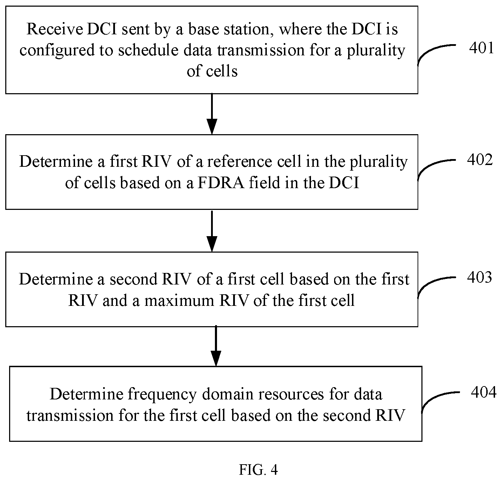

Referring to FIG. 4, FIG. 4 is a flowchart of a resource determining method according to an embodiment, which can be applied to a terminal. The method can include steps 401 to 404.

In step 401, downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 402, a first resource indication value (RIV) of a reference cell in the plurality of cells is determined based on a frequency domain resource allocation (FDRA) field in the DCI.

In an embodiment of the present disclosure, the terminal can determine the first RIV based on bit values indicated by all bits included in the FDRA field.

In step 403, a second RIV of a first cell is determined based on the first RIV and a maximum RIV of the first cell.

In an embodiment of the present disclosure, the maximum RIV of the first cell is determined based on a number of RBs occupied by a BWP configured for the first cell, that is, the maximum RIV of the first cell is determined based on the first RB number $N_{BWP}^{size,c1}$. The first cell is any one of the plurality of cells that is different from the reference cell.

In one possible implementation, if the first RIV is less than or equal to the maximum RIV of the first cell, it is determined that the second RIV of the first cell is equal to the first RIV.

In another possible implementation, if the first RIV is greater than the maximum RIV of the first cell, it is determined that the second RIV is equal to a preset RIV.

In an embodiment of the present disclosure, the preset RIV can be indicated by the base station through signaling or determined by protocol agreements, which is not limited in the present disclosure. Specifically, the preset RIV can be less than or equal to the maximum RIV of the first cell. For example, the preset RIV can be equal to the maximum RIV of the first cell.

In step 404, frequency domain resources for data transmission for the first cell are determined based on the second RIV.

In an embodiment of the present disclosure, the second start RB index value $RB_{start,c1}$ and the second continuous RB number $L_{RBs,\,c1}$ for data transmission for the first cell can be determined based on a corresponding relationship among the second RIV, formula 1, and formula 2 mentioned above (the continuous RB number can also be referred to as a consecutive RB number, that is, a number of RBs continuously occupied from a start RB).

In the above embodiment, the terminal can determine the first RIV of the reference cell based on the FDRA field. The second RIV of the first cell can be determined based on the first RIV and the maximum RIV of the first cell. Further, the terminal can determine the frequency domain resources for the data transmission for the first cell based on the second RIV. On the basis of ensuring scheduling flexibility of the DCI, the FDRA field in the DCI is only used to indicate the first RIV of the reference cell, reducing bit overheads of the DCI, effectively avoiding the problem that the transmission efficiency of the DCI is reduced, and having the high availability.

In some optional embodiments, the FDRA field can be configured to indicate: the first RIV of the reference cell; and the continuous RB number for data transmission for each of the one or more other cells.

Correspondingly, the specific manner to determine frequency domain resources corresponding to one or more other cells is as follows.

Method 3-1: based on the first RIV of the reference cell, a first start RB index value and a first continuous RB number for data transmission for the reference cell are determined (the continuous RB number can also be referred to as a consecutive RB number, that is, a number of RBs continuously occupied from a start RB). Further, start RB index values of the one or more other cells can be determined based on the first start RB index value, and continuous RB numbers of the one or more other cells can be determined based on bit values indicated by bits included in the FDRA field.

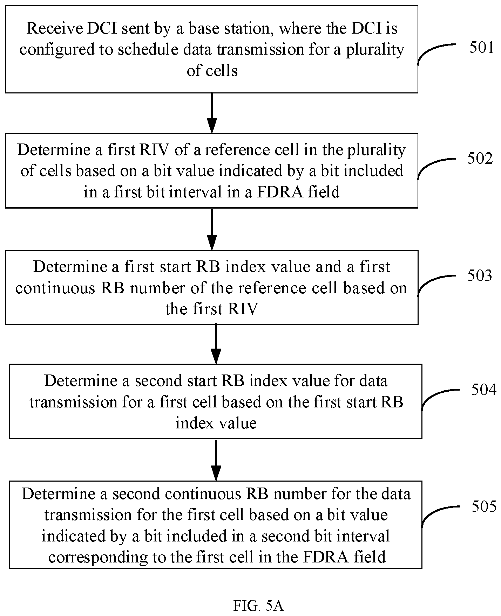

Referring to FIG. 5A, FIG. 5A is a flowchart of a resource determining method according to an embodiment, which can be applied to a terminals. The method can include steps 501 to 505.

In step 501, downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 502, a first RIV of a reference cell in the plurality of cells is determined based on a bit value indicated by a bit included in a first bit interval in a FDRA field.

In one possible implementation, in the FDRA field, the first bit interval is before other bit intervals. It should be noted that in the FDRA field, the order is determined from left to right in this embodiment. Further, the order can also correspond one-to-one from right to left, which is not limited in the present disclosure.

In one possible implementation, the first bit interval occupies a first bit number of bits. The first bit number is equal to a minimum bit number that needs to be occupied when indicating all optional values of the first RIV. All optional values of the first RIV of the reference cell are determined based on a number of RBs occupied by a BWP configured for the reference cell.

In an embodiment of the present disclosure, the first bit number N1 can be determined by the following formula:

$$N1 = \left\lceil \log_2 \left( N_{BWP}^{size,ref} (N_{BWP}^{size,ref} + 1)/2 \right) \right\rceil \qquad \text{formula 5}$$

where $N_{BWP}^{size,c1}$ represents the number of RBs occupied by the BWP configured for the reference cell, and $\lceil \ \rceil$ represents a ceiling function.

All optional values of the first RIV of the reference cell can also be determined based on a number of RBGs occupied by the BWP configured for the reference cell, which in not limited in the present disclosure.

Correspondingly, the first bit number N1 can be determined by the following formula:

$$N1 = \left\lceil \log_2 \left( N_{RBG} (N_{RBG} + 1)/2 \right) \right\rceil \qquad \text{formula 6}$$

where $N_{RBG}$ represents the number of RBGs occupied by the BWP configured for the reference cell, and $\lceil \ \rceil$ represents a ceiling function.

In step 503, a first start RB index value and a first continuous RB number of the reference cell are determined based on the first RIV.

In an embodiment of the present disclosure, the terminal can determine the first start RB index value $RB_{start,ref}$ and the first continuous RB number $L_{RBs,ref}$ for data transmission for the reference cell based on a corresponding relationship among the first RIV, formula 1, and formula 2 mentioned above.

In step 504, a second start RB index value for data transmission for a first cell is determined based on the first start RB index value.

In an embodiment of the present disclosure, the first cell is any one of the plurality of cells that is different from the reference cell. The specific implementation of step 504 is similar to that of step 304, and will not be repeated here.

In step 505, a second continuous RB number for the data transmission for the first cell is determined based on a bit value indicated by a bit included in a second bit interval corresponding to the first cell in the FDRA field.

In one possible implementation, in a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell. It should be noted that in the FDRA field, the order is determined from left to right in this embodiment. Further, the order can also correspond one-to-one from right to left, which is not limited in the present disclosure.

In an embodiment of the present disclosure, the second bit interval is configured to indicate the second continuous RB number for the data transmission for the first cell, and the third bit interval is configured to indicate a third continuous RB number for data transmission for the second cell.

The preset arrangement order can be an order of cell index values from large to small or an order of the cell index values from small to large.

That is, the first bit interval corresponds to the reference cell, located before other bit intervals such as the second bit interval and the third bit interval. Other bit intervals such as the second bit interval and the third bit interval are in one-to-one correspondence with the cell index values based on the order from large to small or from small to large.

For example, if the cell index value of the second cell is smaller than that of the first cell, and the preset arrangement order is the order of the cell index values from large to small, then in the FDRA field, the second bit interval is located before the third bit interval. The first bit interval is located before the second bit interval. In the FDRA field, from left to right are the first bit interval corresponding to the reference cell, the second bit interval corresponding to the first cell, and the third bit interval corresponding to the second cell.

In another possible implementation, the second bit interval occupies a second bit number of bits.

The second bit number is equal to a minimum bit number that needs to be occupied when indicating all optional values of the second start RB index value. All optional values of the second start RB index value can be determined based on the first RB number. That is, all optional values of the second start RB index value can be determined based on a number of RBs occupied by a BWP configured for the first cell.

In an embodiment of the present disclosure, the second bit number N2 can be determined by the following formula:

$$N2 = \left\lceil \log_2 (N_{BWP}^{size,c1}) \right\rceil \qquad \text{formula 7}$$

where $N_{BWP}^{size,c1}$ represents the number of RBs occupied by the BWP configured for the first cell, and $\lceil \ \rceil$ represents a ceiling function.

Or, the FDRA field can be configured to indicate: the first RIV of the reference cell; and a continuous RBG number for data transmission for each of the one or more other cells.

Correspondingly, the second bit number is equal to a minimum bit number that needs to be occupied when indicating all optional values of a second start RBG index value for data transmission for the first cell. All optional values of the second start RBG index value can be determined based on a number of RBGs occupied by the BWP configured for the first cell.

In an embodiment of the present disclosure, the second bit number N2 can be determined by the following formula:

$$N2 = \left\lceil \log_2 (N_{BWP}^{size,c1}/N_{RBG}^{c1}) \right\rceil \qquad \text{formula 8}$$

where $N_{BWP}^{size,c1}$ can represent a number of RBs occupied by the BWP configured for the first cell, and $N_{RBG}^{c1}$ can represent the number of RBGs occupied by the BWP configured for the first cell.

In an embodiment of the present disclosure, $N_{RBG}^{c1}$ can be configured by the base station through signaling or agreed by a protocol.

Optionally, if the base station does not configure $N_{RBG}^{c1}$ through signaling, the terminal can determine $N_{RBG}^{c1}$ as a preset value based on a protocol agreement. The preset value can be a positive integer, such as 1 or 6, which is not limit in the present disclosure.

In the above embodiment, on the basis of ensuring scheduling flexibility of the DCI, the FDRA field in the DCI is used to indicate the first RIV of the reference cell and continuous RB numbers or continuous RBG numbers of other cells, reducing bit overheads of the DCI, effectively avoiding the problem that the transmission efficiency of the DCI is reduced, and having the high availability.

Method 3-2: based on the first RIV of the reference cell, a first start RB index value and a first continuous RB number for data transmission for the reference cell are determined (the continuous RB number can also be referred to as a consecutive RB number, that is, a number of RBs continuously occupied from a start RB). Further, start RB index values of one or more other cells can be determined based on a SCS of the reference cell, SCSs of the one or more other cells, and the first start RB index value. Continuous RB numbers of the one or more other cells can be determined based on bit values indicated by bits included in the FDRA field.

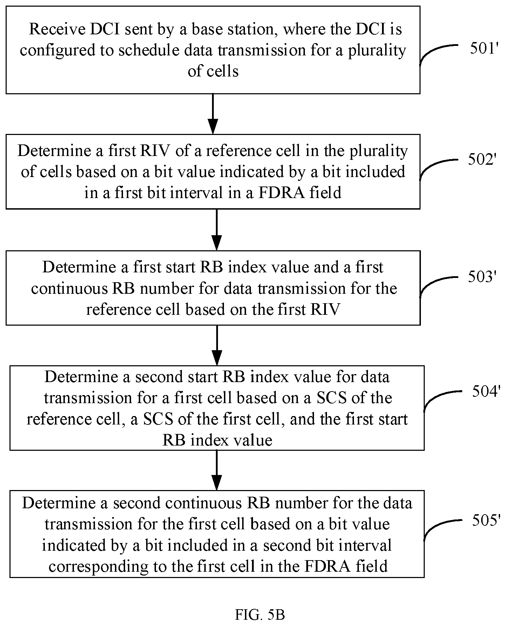

Referring to FIG. 5B, FIG. 5B is a flowchart of a resource determining method according to an embodiment, which can be applied to a terminal. The method can include steps 501' to 505'.

In step 501', downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 502', a first RIV of a reference cell in the plurality of cells is determined based on a bit value indicated by a bit included in a first bit interval in a FDRA field.

In one possible implementation, in the FDRA field, the first bit interval is before other bit intervals. It should be noted that in the FDRA field, the order is determined from left to right in this embodiment. Further, the order can also correspond one-to-one from right to left, which is not limited in the present disclosure.

In one possible implementation, the first bit interval occupies a first bit number of bits. The first bit number is equal to a minimum bit number that needs to be occupied when indicating all optional values of the first RIV. All optional values of the first RIV of the reference cell are determined based on a number of RBs occupied by a BWP configured for the reference cell.

In an embodiment of the present disclosure, the first bit number N1 can be determined by formula 5. All optional values of the first RIV of the reference cell can also be determined based on a number of RBGs occupied by the BWP configured for the reference cell. The reference can be made to formula 6 mentioned above for detail, which will not be repeated here.

In step 503', a first start RB index value and a first continuous RB number for data transmission for the reference cell are determined based on the first RIV.

In an embodiment of the present disclosure, the first start RB index value $RB_{start,ref}$ and the first continuous RB number $L_{RBs,ref}$ for the data transmission for the reference cell can be determined based on a corresponding relationship among the first RIV, formula 1, and formula 2 mentioned above.

In step 504', a second start RB index value for data transmission for a first cell is determined based on a SCS of the reference cell, a SCS of the first cell, and the first start RB index value.

In an embodiment of the present disclosure, the implementation of step 504' is similar to the implementation of step 304'. That is, if $RB_{start,ref}\mu_{ref}/\mu_{c1} = 0, 1, 2, ..., (N_{BWP}^{size,c1} - 1)$, the second start RB index value for the data transmission for the first cell is $RB_{start,c1}=RB_{start,\ ref}\ \mu_{ref}/\mu_{c1}$. The first RB number $N_{BWP}^{size,c1}$ can represent a number of RBs occupied by a BWP configured for the first cell, $\mu_{ref}$ represents the SCS of the reference cell, and $\mu_{c1}$ represents the SCS of the first cell. If $RB_{start,ref}\mu_{ref}/\mu_{c1}$ is greater than or equal to $N_{BWP}^{size,c1}$, the second start RB index value is $RB_{start,c1}= (N_{BWP}^{size,c1}-N)\ \mu_{ref}/\mu_{c1}$, which will not be repeated here.

In step 505', a second continuous RB number for the data transmission for the first cell is determined based on a bit value indicated by a bit included in a second bit interval corresponding to the first cell in the FDRA field.

The implementation of step 505' is similar to that of step 505 mentioned above and will not be repeated here.

In the above embodiment, on the basis of ensuring scheduling flexibility of the DCI, the FDRA field in the DCI is used to indicate the first RIV of the reference cell and continuous RB numbers of other cells, reducing bit overheads of the DCI, effectively avoiding the problem that the transmission efficiency of the DCI is reduced, and having the high availability.

In some optional embodiments, the FDRA field can be configured to indicate: the first RIV of the reference cell; and a start RB index value for data transmission for each of the one or more other cells.

Correspondingly, the specific manner to determine frequency domain resources corresponding to one or more other cells is as follows.

Method 4-1: when SCSs of a plurality of cells scheduled by DCI are the same, a first RB index value and a first continuous RB number for data transmission for the reference cell are determined based on the first RIV of the reference cell (the continuous RB number can also be referred to as a consecutive RB number, that is, a number of RBs continuously occupied from a start RB). Further, continuous RB numbers of one or more other cells can be determined based on the first continuous RB number, and start RB index values of the one or more other cells can be determined based on bit values indicated by bits included in the FDRA field.

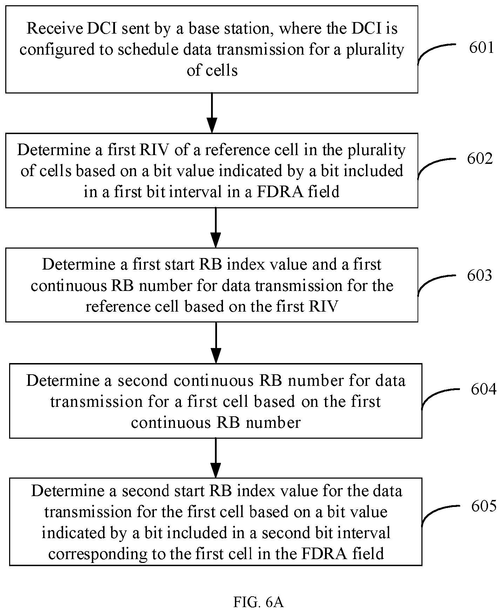

Referring to FIG. 6A, FIG. 6A is a flowchart of a resource determining method according to an embodiment, which can applied to a terminal. The method can include steps 601 to 605.

In step 601, downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 602, a first RIV of a reference cell in the plurality of cells is determined based on a bit value indicated by a bit included in a first bit interval in a FDRA field.

In one possible implementation, in the FDRA field, the first bit interval is before other bit intervals. It should be noted that in the FDRA field, the order is determined from left to right in this embodiment. Further, the order can also correspond one-to-one from right to left, which is not limited in the present disclosure.

In one possible implementation, the first bit interval occupies a first bit number of bits. The first bit number is equal to a minimum bit number that needs to be occupied when indicating all optional values of the first RIV. All optional values of the first RIV of the reference cell are determined based on a number of RBs occupied by a BWP configured for the reference cell.

In an embodiment of the present disclosure, the first bit number N1 can be determined by formula 5. All optional values of the first RIV of the reference cell can also be determined based on a number of RBGs occupied by the BWP configured for the reference cell. The reference can be made to formula 6 mentioned above for detail, which will not be repeated here.

In step 603, a first start RB index value and a first continuous RB number for data transmission for the reference cell are determined based on the first RIV.

In an embodiment of the present disclosure, the terminal can determine the first start RB index value and the first continuous RB number based on a corresponding relationship among the first RIV, formula 1, and formula 2 mentioned above.

In step 604, a second continuous RB number for data transmission for a first cell is determined based on the first continuous RB number.

In an embodiment of the present disclosure, the first cell is any one of the one or more other cells.

In one possible implementation, in a case where the first continuous RB number $L_{RBs,\ ref}$ is less than or equal to a first RB number $N_{BWP}^{size,c1}$, that is, $1 \leq L_{RBs,\ ref} \leq N_{BWP}^{size,c1}$, the terminal can determine that the second continuous RB number $L_{RBs,\ c1}$ is equal to the first continuous RB number $L_{RBs,\ ref}$, that is, $L_{RBs,\ c1} = L_{RBs,\ ref}$. The first RB number $N_{BWP}^{size,c1}$ is a number of RBs occupied by a BWP configured for the first cell.

In another possible implementation, in a case where the first continuous RB number $L_{RBs,\ ref}$ is greater than the first RB number $N_{BWP}^{size,c1}$, that is, $L_{RBs,\ ref} > N_{BWP}^{size,c1}$, the terminal can determine that the second continuous RB number $L_{RBs,\ c1}$ is equal to the first RB number $N_{BWP}^{size,c1}$, that is, $L_{RBs,\ c1} = N_{BWP}^{size,c1}$.

Or, in this case, the second continuous RB number $L_{RBs,\ c1}$ can be equal to a difference between the first RB number $N_{BWP}^{size,c1}$ and a preset difference M. The preset difference M can be configured by the base station through signaling or agreed by a protocol, which is not limited in the present disclosure. The preset difference M can be an integer greater than or equal to zero. For example, if the preset difference M is 0, then $L_{RBs,\ c1} = N_{BWP}^{size,c1}$.

In step 605, a second start RB index value for the data transmission for the first cell is determined based on a bit value indicated by a bit included in a second bit interval corresponding to the first cell in the FDRA field.

In one possible implementation, in a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell. It should be noted that in the FDRA field, the order is determined from left to right in this embodiment. Further, the order can also correspond one-to-one from right to left, which is not limited in the present disclosure.

The second bit interval is configured to indicate the second start RB index value for the data transmission for the first cell, and the third bit interval is configured to indicate a third start RB index value for data transmission for the second cell.

The preset arrangement order can be an order of cell index values from large to small or an order of the cell index values from small to large.

That is, the first bit interval corresponds to the reference cell, located before other bit intervals such as the second bit interval and the third bit interval. Other bit intervals such as the second bit interval and the third bit interval correspond to the cell index values based on the order from large to small or from small to large.

For example, if the cell index value of the second cell is greater than that of the first cell, and the preset arrangement order is the order of the cell index values from large to small, then in the FDRA field, the third bit interval is located before the second bit interval. The first bit interval is located before the second bit interval. In the FDRA field, from left to right are the first bit interval corresponding to the reference cell, the third bit interval corresponding to the second cell, and the second bit interval corresponding to the first cell.

In another possible implementation, the second bit interval occupies a second bit number of bits. The second bit number is equal to a minimum bit number that needs to be occupied when indicating all optional values of the second start RB index value. All optional values of the second start RB index value can be determined based on the first RB number. That is, all optional values of the second start RB index value can be determined based on a number of RBs occupied by a BWP configured for the first cell.

In an embodiment of the present disclosure, the second bit number N2 can be determined by the following formula:

$$N2=\left\lceil\log_2\left(N_{BWP}^{size,c1}\right)\right\rceil \qquad \text{formula 7}$$

where $N_{BWP}^{size,c1}$ represents the number of RBs occupied by the BWP configured for the first cell, and $\lceil\ \rceil$ represents a ceiling function.

Or, the FDRA field can be configured to indicate: the first RIV of the reference cell; and a start RBG index value for data transmission for each of the one or more other cells.

Correspondingly, the second bit number is equal to a minimum bit number that needs to be occupied when indicating all optional values of a second start RBG index value for data transmission for the first cell. All optional values of the second start RBG index value can be determined based on a number of RBGs occupied by the BWP configured for the first cell.

In an embodiment of the present disclosure, the second bit number N2 can be determined by the following formula:

$$N2=\left\lceil\log_2\left(N_{BWP}^{size,c1}/N_{RBG}^{c1}\right)\right\rceil \qquad \text{formula 8}$$

where $N_{BWP}^{size,c1}$ can represent a number of RBs occupied by the BWP configured for the first cell, and $N_{RBG}^{c1}$ can represent the number of RBGs occupied by the BWP configured for the first cell.

In an embodiment of the present disclosure, $N_{RBG}^{c1}$ can be configured by the base station through signaling or agreed by a protocol.

Optionally, if the base station does not configure $N_{RBG}^{c1}$ through signaling, the terminal can determine $N_{RBG}^{c1}$ as a preset value based on a protocol agreement. The preset value can be a positive integer, such as 1 or 6, which is not limit in the present disclosure.

In the above embodiment, on the basis of ensuring scheduling flexibility of the DCI, the FDRA field in the DCI is used to indicate the first RIV of the reference cell and start RB index values or start RBG index values of other cells, reducing bit overheads of the DCI, effectively avoiding the problem that the transmission efficiency of the DCI is reduced, and having the high availability.

Method 4-2: based on the first RIV of the reference cell, a first start RB index value and a first continuous RB number for data transmission for the reference cell are determined (the continuous RB number can also be referred to as a consecutive RB number, that is, a number of RBs continuously occupied from a start RB). Further, continuous RB numbers of one or more other cells can be determined based on a SCS of the reference cell, SCSs of the one or more other cells, and the first continuous RB number. Start RB index values of the one or more other cells can be determined based on bit values indicated by bits included in the FDRA field.

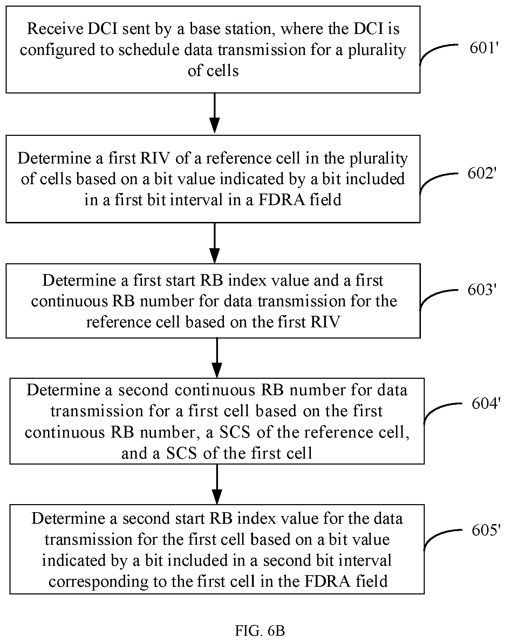

Referring to FIG. 6B, it is a flowchart of a resource determining method according to an embodiment, which can be applied to a terminal. The method can include steps 601' to 605'.

In step 601', downlink control information (DCI) sent by a base station is received, where the DCI is configured to schedule data transmission for a plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

In step 602', a first RIV of a reference cell in the plurality of cells is determined based on a bit value indicated by a bit included in a first bit interval in a FDRA field.

In one possible implementation, in the FDRA field, the first bit interval is before other bit intervals. It should be noted that in the FDRA field, the order is determined from left to right in this embodiment. Further, the order can also correspond one-to-one from right to left, which is not limited in the present disclosure.

In one possible implementation, the first bit interval occupies a first bit number of bits. The first bit number is equal to a minimum bit number that needs to be occupied when indicating all optional values of the first RIV. All optional values of the first RIV of the reference cell are determined based on a number of RBs occupied by a BWP configured for the reference cell. In an embodiment of the present disclosure, the first bit number N1 can be determined by formula 5. All optional values of the first RIV of the reference cell can also be determined based on a number of RBGs occupied by the BWP configured for the reference cell. The reference can be made to formula 6 mentioned above for detail, which will not be repeated here.

In step 603', a first start RB index value and a first continuous RB number for data transmission for the reference cell are determined based on the first RIV.

In an embodiment of the present disclosure, the terminal can determine the first start RB index value and the first continuous RB number based on a corresponding relationship among the first RIV, formula 1, and formula 2 mentioned above.

In step 604', a second continuous RB number for data transmission for a first cell is determined based on the first continuous RB number, a SCS of the reference cell, and a SCS of the first cell.

In an embodiment of the present disclosure, the first cell is any one of the one or more other cells.

In one possible implementation, in a case where a frequency point size $L_{RBs,\ ref}\mu_{ref}/\mu_{c1}$ corresponding to the first continuous RB number is less than or equal to a first RB number $N_{BWP}^{size,c1}$, where the first RB number $N_{BWP}^{size,c1}$ is a number of RBs occupied by a BWP configured for the first cell, that is, $1 \le L_{RBs,\ ref}\mu_{ref}/\mu_{c1} \le N_{BWP}^{size,c1}$, the terminal can determine that the second continuous RB number $L_{RBs,\ c1} = L_{RBs,\ ref}\mu_{ref}/\mu_{c1}$. where $\mu_{ref}$ represents the SCS of the reference cell, and $\mu_{c1}$ represents the SCS of the first cell.

In another possible implementation, in a case where the frequency point size $L_{RBs,\ ref}\mu_{ref}/\mu_{c1}$ corresponding to the first continuous RB number is greater than the first RB number $N_{BWP}^{size,c1}$, that is, $L_{RBs,\ ref}\mu_{ref}/\mu_{c1} > N_{BWP}^{size,c1}$, the terminal can determine that the second continuous RB number $L_{RBs,\ c1}$ is equal to the first RB number $N_{BWP}^{size,c1}$, that is,

$$L_{RBs,\ c1} = N_{BWP}^{size,c1}.$$

Or, in this case, the second continuous RB number $L_{RBs,\ c1}$ can be equal to a difference between the first RB number $N_{BWP}^{size,c1}$ and a preset difference M. The preset difference M can be configured by the base station through signaling or agreed by a protocol, which is not limited in the present disclosure. The preset difference M can be an integer greater than or equal to zero.

In step 605', a second start RB index value for the data transmission for the first cell is determined based on a bit value indicated by a bit included in a second bit interval corresponding to the first cell in the FDRA field.

The implementation of step 605' is similar to that of step 605, and will not be repeated here.

In the above embodiment, on the basis of ensuring scheduling flexibility of the DCI and considering different SCSs of the plurality of cells scheduled by the DCI, the FDRA field in the DCI is used to indicate the first RIV of the reference cell and start RB index values or start RBG index values of other cells, reducing bit overheads of the DCI, effectively avoiding the problem that the transmission efficiency of the DCI is reduced, and having the high availability.

Next, a multi-carrier scheduling method provided in the present disclosure will be introduced from a base station side.

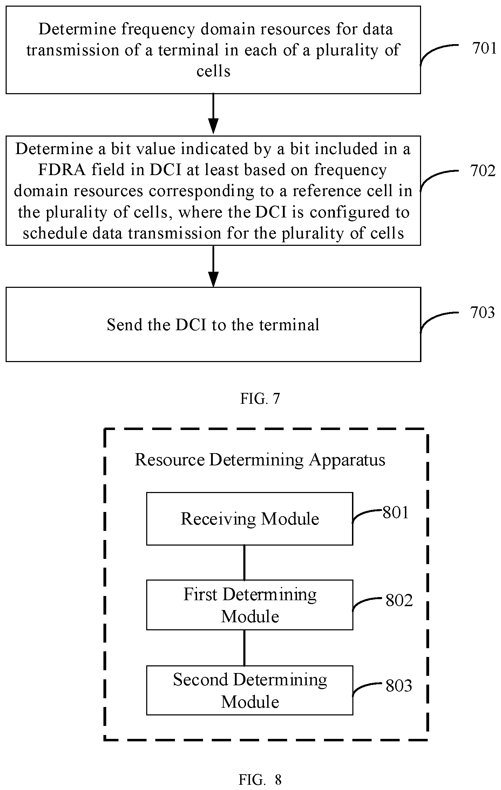

An embodiment of the present disclosure provides a multi-carrier scheduling method, as shown in FIG. 7. FIG. 7 is a flowchart of a multi-carrier scheduling method according to an embodiment, which can be applied to a base station. The method can include steps 701 to 703.

In step 701, frequency domain resources for data transmission of a terminal in each of a plurality of cells are determined.

In step 702, a bit value indicated by a bit included in a frequency domain resource allocation (FDRA) field in downlink control information (DCI) is determined at least based on frequency domain resources corresponding to a reference cell in the plurality of cells. The DCI is configured to schedule data transmission for the plurality of cells.

In an embodiment of the present disclosure, the DCI is configured to schedule the data transmission for the plurality of cells, which may include but not limited to scheduling PDSCHs of the plurality of cells and/or PUSCHs of the plurality of cells. Each cell corresponds to one PDSCH and/or each cell corresponds to one PUSCH.

It should be noted that in the embodiment of the present disclosure, the base station needs to first determine the frequency domain resources for the data transmission of the terminal in each of the plurality of cells, and then perform step 702. That is, the bit value indicated by the bit included in the FDRA field in the DCI is determined at least based on the frequency domain resources corresponding to the reference cell. In step 703, the DCI is sent to the terminal.

In an embodiment of the present disclosure, after determining the bit value indicated by the bit included in the FDRA field in the DCI, the DCI is sent to the terminal, so that the terminal can determine at least the frequency domain resources corresponding to the reference cell based on the FDRA field in the DCI, and then determine frequency domain resources corresponding to one or more other cells at least based on the frequency domain resources corresponding to the reference cell.

In the above embodiments, bit overheads of the DCI can be reduced on the basis of ensuring scheduling flexibility of the DCI, thereby effectively avoiding the problem that the transmission efficiency of the DCI is reduced and having the high availability.

In some optional embodiments, the base station can first determine a first start resource block (RB) index value and a first continuous RB number for data transmission of the terminal in the reference cell; and further determine a second start RB index value for data transmission of the terminal in a first cell based on the first start RB index value, where the first cell is any one of one or more other cells. The one or more other cells here refer to one or more other cells in the plurality of cells scheduled by the DCI except for the reference cell. A second continuous RB number for the data transmission of the terminal in the first cell is determined based on the second start RB index value and the first continuous RB number.

The specific determining method is similar to methods 1-1 and 1-2 mentioned above, and will not be repeated here.

In an embodiment of the present disclosure, the base station can determine the first RIV based on the first start RB index value and the first continuous RB number of the reference cell, according to corresponding relationships of formula 1 and formula 2 above. That is, the first RIV is associated with the first start RB index value and the first continuous RB number. Further, the base station determines the bit value indicated by the bit included in the FDRA field in the DCI based on the first RIV. The FDRA field is configured to indicate the first RIV of the reference cell.

In some optional embodiments, the base station can first determine a first resource indication value (RIV) of the terminal in the reference cell. Further, the base station determines a second RIV of a first cell based on the first RIV and a maximum RIV of the first cell, and determines frequency domain resources for data transmission of the terminal in the first cell based on the second RIV. The specific determining method is similar to method 2 mentioned above, and will not be repeated here.

In an embodiment of the present disclosure, the base station can directly determine the bit value indicated by the bit included in the FDRA field in the DCI based on the first RIV of the reference cell. That is, the FDRA field is configured to indicate the first RIV of the reference cell.

In some optional embodiments, the base station can determine a first start resource block (RB) index value and a first continuous RB number for data transmission of the terminal in the reference cell. Further, the base station determines a second start RB index value for data transmission of the terminal in a first cell based on the first start RB index value, where the first cell is any one of one or more other cells in the plurality of cells. The base station can also determine a second continuous RB number for the data transmission of the terminal in the first cell.

The specific determining method is similar to methods 3-1 and 3-2 mentioned above, and will not be repeated here.

In an embodiment of the present disclosure, the base station can first determine the first RIV of the reference cell based on the first start RB index value and the first continuous RB number, according to corresponding relationships of formula 1 and formula 2 above. That is, the first RIV is associated with the first start RB index value and the first continuous RB number. The base station can determine a bit value indicated by a bit included in a first bit interval in the FDRA field based on the first RIV. In addition, the base station can determine a bit value indicated by a bit included in a second bit interval corresponding to the first cell in the FDRA field based on a second continuous RB number for data transmission for the first cell. That is, in the embodiment of the present disclosure, the FDRA field is configured to indicate: the first RIV of the reference cell, where the first RIV is associated with the first start RB index value and the first continuous RB number; and a continuous RB number for data transmission for each of the one or more other cells.

In the FDRA field, the first bit interval is before other bit intervals. It should be noted that in the FDRA field, the order is determined from left to right in this embodiment. Further, the order can also correspond one-to-one from right to left, which is not limited in the present disclosure.

In a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell.

That is, the first bit interval corresponds to the reference cell, located before other bit intervals such as the second bit interval and the third bit interval. Other bit intervals such as the second bit interval and the third bit interval correspond to the cell index values based on the order from large to small or from small to large.

The first bit interval occupies a first bit number of bits, and the second bit interval occupies a second bit number of bits. The manner of determining the first bit number and the second bit number is similar to that of the terminal side, and will not be repeated here.

In some optional embodiments, the base station can determine a first start resource block (RB) index value and a first continuous RB number for data transmission of the terminal in the reference cell. Further, the base station determines a second continuous RB number for data transmission of the terminal in a first cell based on the first continuous RB number, where the first cell is any one of one or more other cells in the plurality of cells. The base station can also determine a second start RB index value for the data transmission of the terminal in the first cell.

The specific determining method is similar to the methods 4-1 and 4-2 mentioned above, and will not be repeated here.

In an embodiment of the present disclosure, the base station can first determine the first RIV of the reference cell based on the first start RB index value and the first continuous RB number, according to corresponding relationships of formula 1 and formula 2 above. That is, the first RIV is associated with the first start RB index value and the first continuous RB number. The base station can determine a bit value indicated by a bit included in a first bit interval in the FDRA field based on the first RIV. In addition, the base station can determine a bit value indicated by a bit included in a second bit interval corresponding to the first cell in the FDRA field based on the second start RB index value for data transmission for the first cell. That is, in the embodiment of the present disclosure, the FDRA field is configured to indicate: the first RIV of the reference cell, where the first RIV is associated with the first start RB index value and the first continuous RB number; and a start RB index value for data transmission for each of the one or more other cells.

In the FDRA field, the first bit interval is before other bit intervals. It should be noted that in the FDRA field, the order is determined from left to right in this embodiment. Further, the order can also correspond one-to-one from right to left, which is not limited in the present disclosure.

In a case where the one or more other cells include a plurality of cells, an order of the second bit interval corresponding to the first cell in the FDRA field relative to a third bit interval corresponding to a second cell is same as a preset arrangement order of a cell index value of the first cell relative to a cell index value of the second cell, where the second cell is any one of the one or more other cells that is different from the first cell.

That is, the first bit interval corresponds to the reference cell, located before other bit intervals such as the second bit interval and the third bit interval. Other bit intervals such as the second bit interval and the third bit interval correspond to the cell index values based on the order from large to small or from small to large.

The first bit interval occupies a first bit number of bits, and the second bit interval occupies a second bit number of bits. The manner of determining the first bit number and the second bit number is similar to that of the terminal side, and will not be repeated here.

In the above embodiments, bit overheads of the DCI can be reduced on the basis of ensuring scheduling flexibility of the DCI, thereby effectively avoiding the problem that the transmission efficiency of the DCI is reduced and having the high availability.

In some optional embodiments, a manner of determining the reference cell by the base station is similar to a manner of determining the reference cell by the terminal, which will not be repeated here.

The above resource determining method and the multi-carrier scheduling method are further illustrated as follows.

Embodiment 1: assuming that a terminal is a terminal that supports a Rel-18 version and a subsequent version. The terminal receives DCI for scheduling multi-cell data transmission, and receives PDSCHs of a plurality of cells or transmits PUSCHs of the plurality of cells based on indication information corresponding to the DCI.

In this embodiment, multi-cell DCI is subsequently used to refer to the DCI for scheduling the multi-cell data transmission. Considering that frequency domain resource information of different scheduled cells indicated by a FDRA field of the multi-cell DCI is based on a type 1 resource type scenario, by designing a corresponding FDRA field indication manner, a single DCI can indicate the frequency domain resource information of multi-cell PDSCH/PUSCH.

In one possible implementation, a reference cell in a multi-cell scheduling scenario is determined. The reference cell can be determined based on a manner indicated by a base station using signaling, for example, indicating a cell identifier of the reference cell. The reference cell can also be determined in a predefined manner, for example, taking a cell where the multi-cell DCI is received as the reference cell, or taking a cell corresponding to a largest number of RBs occupied by a configured BWP of a scheduled cell as the reference cell, or taking a cell corresponding to a smallest number of RBs occupied by the configured BWP of the scheduled cell as the reference cell, or taking a cell with a maximum or minimum cell index value of the scheduled cell as the reference cell, which is not limited by the present disclosure.

In one possible implementation, the terminal receives the multi-cell DCI and parses a first RIV of the reference cell indicated by the corresponding FDRA field. The first RIV is represented by n, which is associated with a number of RBs (that is, $N_{BWP}^{size,ref}$) occupied by the configured BWP of the reference cell, a first start RB index value $RB_{start,ref}$ of the reference cell and a first continuous RB number $L_{RBs,\ ref}$ of the reference cell. The specific association manner refers to formula 1 and formula 2.

Alternatively, n represents a number of RBGs occupied by the BWP configured for the reference cell, and correspondingly, a first start RBG index value of the reference cell is associated with a first continuous RBG number.

Except for the reference cell, frequency domain information of other cells (for example, a first cell c1), namely a second start RB index value $RB_{start,c1}$ and a second continuous RB number $L_{RBs,\ c1}$, are determined based on the following manners. The number of RBs occupied by the configured BWP of the cell c1 (that is, a first RB number) is defined to be $N_{BWP}^{size,c1}$.

If the first start RB index value $RB_{start,ref}$ and the first continuous RB number $L_{RBs, ref}$ configured for the reference cell satisfy the following constraint: $RB_{start,ref} = 0, 1, 2, ..., (N_{BWP}^{size,c1} - 1)$,

then the second start RB index value $RB_{start,c1}$ and the second continuous RB number $L_{RBs, c1}$ of data transmission for other cells (for example, the first cell c1) are the same as those in the reference cell, that is, $RB_{start,c1} = RB_{start,ref}$; and

if $1 \leq L_{RBs, ref} \leq N_{BWP}^{size,c1} - RB_{start,ref}$, then the second continuous RB number $L_{RBs, ref}$ transmitted by the first cell is the same as the first continuous RB number $L_{RBs, ref}$ of the reference cell, that is, $L_{RBs, c1} = L_{RBS, ref}$.

If the first start RB index value $RB_{start,ref}$ configured for the reference cell does not satisfy the following constraint:

$$RB_{start,ref} = 0, 1, 2, ..., (N_{BWP}^{size,c1} - 1),$$

then the second start RB index value $RB_{start,c1} = N_{BWP}^{size,c1} - N$ and $L_{RBs, c1} = N$, where N represents a preset continuous RB number, and N can be 1 in the present disclosure.

If the second start RB index value $RB_{start,c1}$ configured for the reference cell satisfies the following constraint:

$$RB_{start,ref} = 0, 1, 2, ..., (N_{BWP}^{size,c1} - 1),$$

then $RB_{start,c1} = RB_{start,ref}$; and
if the second start RB index value $RB_{start,c1}$ configured for the reference cell does not satisfy the following constraint:

$$1 \leq L_{RBs, ref} \leq N_{BWP}^{size,c1} - RB_{start,c1},$$

then

$$L_{RBs, c1} = N_{BWP}^{size,c1} - RB_{start,c1}.$$

Table 1 and Table 2 illustrate the above solutions by taking the number of RBs occupied by the configured BWP of the reference cell being equal to 8 (that is, $N_{BWP}^{size,ref} = 8$) and the number of RBs occupied by the configured BWP of the first cell c1 being equal to 4 (that is, $N_{BWP}^{size,c1} = 4$) as examples.

# EP 4 535 890 A1

Table 1 Mapping relationships between RIV with $RB_{start,ref}$ and $L_{RBs,\,ref}$ under a condition of

$$N_{BWP}^{size,ref} = 8$$

| RIV ╲ $L_{RBs,ref}$ / $RB_{start,ref}$ | 1 | 2 | 3 | 4 | 5 | 6 | 7 | 8 |
|---|---|---|---|---|---|---|---|---|
| 0 | 0 | 8 | 16 | 24 | 32 | 31 | 23 | 15 |
| 1 | 1 | 9 | 17 | 25 | 33 | 30 | 22 | |
| 2 | 2 | 10 | 18 | 26 | 34 | 29 | | |
| 3 | 3 | 11 | 19 | 27 | 35 | | | |
| 4 | 4 | 12 | 20 | 28 | | | | |
| 5 | 5 | 13 | 21 | | | | | |
| 6 | 6 | 14 | | | | | | |
| 7 | 7 | | | | | | | |

Table 2 Mapping relationships between RIV with $RB_{start,c1}$ and $L_{RBs,\,c1}$ under a condition of

$$N_{BWP}^{size,c1} = 4$$

| RIV ╲ $L_{RBs,c1}$ / $RB_{start,c1}$ | 1 | 2 | 3 | 4 |
|---|---|---|---|---|
| 0 | 0 | 4 | 8 | 7 |
| 1 | 1 | 5 | 9 | |
| 2 | 2 | 6 | | |
| 3 | 3 | | | |

Based on the above solutions, if the FDRA field of the multi-cell DCI indicates that the RIV is equal to 8, then $RB_{start,ref}$ = 0 and $L_{RBs,\,ref}$ = 2.

Since $RB_{start,ref}$ of the reference cell satisfies the constraint $RB_{start,ref} = 0, 1, 2, \ldots, (N_{BWP}^{size,c1} - 1)$, the frequency domain information corresponding to the scheduled cell c1 is $RB_{start,c1}$ = $RB_{start,ref}$ = 0, and since $1 \leq L_{RBs,\,ref} \leq N_{BWP}^{size,c1} - RB_{start,c1}$, $L_{RBs,\,c1}$ = $L_{RBs,\,ref}$ = 2.

If the FDRA field of the multi-cell DCI indicates that the RIV is equal to 5, then $RB_{start,ref}$ = 5 does not satisfy the following constraint:

$$RB_{start,ref} = 0, 1, 2, \ldots, (N_{BWP}^{size,c1} - 1),$$

the preset continuous RB number is N and N is 1, then $RB_{start,c1} = N_{BWP}^{size,c1} - 1 = 3$ and $L_{RBs,\,c1}$ = 1.

If the first RIV indicated by the FDRA field of the multi-cell DCI is equal to 25, then $RB_{start,ref}$ = 1 satisfies the following constraint:

$$RB_{start,ref} = 0, 1, 2, \ldots, (N_{BWP}^{size,c1} - 1), \text{ then } RB_{start,c1} = RB_{start,ref} = 1,$$

and $L_{RBs,\,ref}$ = 4 does not satisfy the following constraint:

24

$$1 \leq L_{RBs,\ ref} \leq N_{BWP}^{size,c1} - RB_{start,c1},$$

then $L_{RBs,\ c1} = N_{BWP}^{size,c1} - RB_{start,ref} = 3$.

In one possible implementation, the terminal receives the multi-cell DCI and parses a first RIV of the reference cell indicated by the corresponding FDRA field. The first RIV is associated with a number of RBs $N_{BWP}^{size,ref}$ occupied by the configured BWP of the reference cell, a first start RB index value $RB_{start,ref}$ of the reference cell and a first continuous RB number $L_{RBs,\ ref}$ of the reference cell, and the specific association manner refers to formula 1 and formula 2. Except for the reference cell, frequency domain information of other cells (for example, the first cell c1), namely a second start RB index value $RB_{start,c1}$ and a second continuous RB number $L_{RBs,\ c1}$, are determined based on the following manners. The number of RBs occupied by the configured BWP of the cell c1 is defined, that is, a first RB number is $N_{BWP}^{size,c1}$, and a sub-carrier spacing (SCS) corresponding to a carrier where the reference cell is located is $\mu_{ref}$, and a sub-carrier spacing (SCS) corresponding to a carrier where the cell c1 is located is $\mu_{c1}$.

If a frequency point size corresponding to $RB_{start,ref}$ satisfies the following constraint:

$$RB_{start,ref}\ \mu_{ref}/\mu_{c1} = 0, 1, 2, ..., (N_{BWP}^{size,c1} - 1),$$

then $RB_{start,c1} = RB_{start,ref}\ \mu_{ref}/\mu_{c1}$, and
if a frequency point size corresponding to $L_{RBs,\ ref}$ satisfies the following constraint:

$$1 \leq L_{RBs,\ ref}\ \mu_{ref}/\mu_{c1} \leq N_{BWP}^{size,c1} - RB_{start,c1}, \text{ then } L_{RBs,\ c1} = L_{RBs,\ ref}\ \mu_{ref}/\mu_{c1}.$$

If the frequency point size corresponding to $RB_{start,ref}$ does not satisfy the following constraint:

$$RB_{start,ref}\ \mu_{ref}/\mu_{c1} = 0, 1, 2, ..., (N_{BWP}^{size,c1} - 1), \text{ then } RB_{start,c1} = N_{BWP}^{size,c1} - N,$$

and
$L_{RBs,\ c1} = N$, where N represents a preset continuous RB number, and N can be 1 in the present disclosure.

If the frequency point size corresponding to $RB_{start,ref}$ satisfies the following constraint:

$$RB_{start,ref}\ \mu_{ref}/\mu_{c1} = 0, 1, 2, ..., (N_{BWP}^{size,c1} - 1),$$

then $RB_{start,c1} = RB_{start,ref}\ \mu_{ref}/\mu_{c1}$, and
if the frequency point size corresponding to $L_{RBs,\ ref}$ does not satisfy the following constraint:

$$1 \leq L_{RBs,\ ref}\ \mu_{ref}/\mu_{c1} \leq N_{BWP}^{size,c1} - RB_{start,c1},$$

then $L_{RBs,\ c1} = N_{BWP}^{size,c1} - RB_{start,c1}$.

The exemplary descriptions of the solutions can refer to relevant mechanisms in Table 1 and Table 2, and introduce the influence of SCS, which will not be repeated here.

According to this embodiment, by using a joint indication manner to determine the FDRA resources of the data for different scheduled cells, bit overheads of the multi-cell DCI can be effectively reduced, and the excessive transmission code rate of the multi-cell DCI and the loss of transmission performance of the DCI can be avoided, thereby reducing cell scheduling performance.

Embodiment 2

As described in Embodiment 1, assuming that the terminal is a terminal that supports a Rel-18 version and a subsequent version. The terminal receives DCI for multi-cell scheduling, and receives PDSCHs of the plurality of cells or transmits PUSCHs of the plurality of cells based on indication information corresponding to the DCI.

In this embodiment, multi-cell DCI is used to refer to the DCI for scheduling the multi-cell data transmission. Considering that frequency domain resource information of different scheduled cells indicated by a FDRA field of the multi-cell DCI is based on a type 1 resource type scenario, by designing a corresponding FDRA field indication manner, a single DCI can indicate the frequency domain resource information of multi-cell PDSCH/PUSCH.

In one possible implementation, a reference cell in a multi-cell scheduling scenario is determined. The reference cell can be determined based on a manner indicated by a base station using signaling, for example, indicating a cell identifier of the reference cell. The reference cell can also be determined in a predefined manner, for example, taking a cell where the multi-cell DCI is received as the reference cell, or taking a cell corresponding to a largest number of RBs occupied by a configured BWP of a scheduled cell as the reference cell, or taking a cell corresponding to a smallest number of RBs occupied by the configured BWP of the scheduled cell as the reference cell, or taking a cell with a maximum or minimum cell index value of the scheduled cell as the reference cell, which is not limited by the present disclosure.

In one possible implementation, the terminal receives the multi-cell DCI and parses the first RIV of the reference cell indicated by the corresponding FDRA field. The first start RB index value $RB_{start,ref}$ of the reference cell and the first continuous RB number $L_{RBs,\ ref}$ of the reference cell are determined based on the first RIV and the number of RBs $N_{BWP}^{size,ref}$ occupied by the configured BWP of the reference cell, and the determination manner is the same as the relevant mechanisms. Any cell c1 (that is, the first cell c1) of other scheduled cells other than the corresponding reference cell corresponds to the frequency domain information of transmission data, that is, the second start RB index value $RB_{start,c1}$ and the second continuous RB number $L_{RBs,\ c1}$ are determined based on the following manners.

The first RIV is associated with the number of RBs $N_{BWP}^{size,ref}$ occupied by the configured BWP of the reference cell, the first start RB index value $RB_{start,ref}$ and the first continuous RB number $L_{RBs,\ ref}$, and the specific association manner refers to formula 1 and formula 2. Except for the reference cell, frequency domain information $RB_{start,c1}$ and $L_{RBS,\ c1}$ of other cells (for example, the first cell c1) are determined based on the following manners. The number of RBs occupied by the configured BWP of the cell c1 (that is, the first RB number) is defined to be $N_{BWP}^{size,c1}$.

A maximum RIV $RIV_{c1,max}$ that can be supported by the FDRA field corresponding to the cell c1 based on the relevant mechanisms is determined. If the first RIV indicated by the FDRA field corresponding to multi-cell DCI is less than or equal to $RIV_{c1,max}$, then a second RIV corresponding to the first cell c1 is equal to the first RIV.

If the first RIV is greater than $RIV_{c1,max}$, then the second RIV corresponding to the first cell c1 is equal to a preset RIV, where the preset RIV is less than or equal to $RIV_{c1,max}$. Optionally, the preset RIV can be equal to $RIV_{c1,max}$.

The frequency domain information $RB_{start,c1}$ and $L_{RBs,\ c1}$ of the transmission data corresponding to the first cell c1 are determined by the first RIV and the number of RBs $N_{BWP}^{size,c1}$ occupied by the configured BWP of the cell c1.

Taking Table 1 and Table 2 as examples, the maximum RIV $RIV_{c1,max}$ that can be supported by the FDRA field corresponding to the cell c1 based on the relevant mechanisms is equal to 9, that is, $RIV_{c1,max} = 9$.

If the first RIV indicated by the FDRA field corresponding to the multi-cell DCI is represented by n and n=6, a corresponding $RIV_{c1}$ is equal to 6 (that is, $RIV_{c1} = 6$), $RB_{start,c1} = 2$, and $L_{RBs,\ c1} = 2$, where $RIV_{c1}$ is the second RIV.

For the RIV, if n=24, then the corresponding $RIV_{c1}$ is equal to 9 (that is, $RIV_{c1} = 9$), $RB_{start,c1} = 1$, and $L_{RBs,\ c1} = 3$.

For the first RIV, that is, n is greater than $RIV_{c1,max}$, in another possible implementation, $RB_{start,c1} = 0$, and $L_{RBs,\ c1} = 4$.

According to this embodiment, by sharing RIV to indicate the FDRA information for different scheduled cells, bit overheads of the multi-cell DCI can be effectively reduced, and the excessive transmission code rate of the multi-cell DCI and the loss of transmission performance of the DCI can be avoided, thereby reducing cell scheduling performance.

Embodiment 3

As described in Embodiment 1, assuming that the terminal is a terminal that supports a Rel-18 version and a subsequent version. The terminal receives DCI for multi-cell scheduling, and receives PDSCHs of the plurality of cells or transmits PUSCHs of the plurality of cells based on indication information corresponding to the DCI.

In this embodiment, considering that frequency domain resource information of different scheduled cells indicated by a FDRA field of the multi-cell DCI is based on a type 1 resource type scenario, by designing a corresponding FDRA field indication manner, a single DCI can indicate the frequency domain resource information of multi-cell PDSCH/PUSCH.

In one possible implementation, a reference cell in a multi-cell scheduling scenario is determined. The reference cell can be determined based on a manner indicated by a base station using signaling, for example, indicating a cell identifier of the reference cell. The reference cell can also be determined in a predefined manner, for example, taking a cell where the multi-cell DCI is received as the reference cell, or taking a cell corresponding to a largest number of RBs occupied by a configured BWP of a scheduled cell as the reference cell, or taking a cell corresponding to a smallest number of RBs occupied by the configured BWP of the scheduled cell as the reference cell, or taking a cell with a maximum or minimum cell index value of the scheduled cell as the reference cell, which is not limited by the present disclosure.

In one possible implementation, the terminal receives the multi-cell DCI and parses the first RIV of the reference cell indicated by first N1 bits in the corresponding FDRA field. $N1 = \left\lceil \log_2 \left( N_{\mathrm{BWP}}^{\mathrm{size,ref}} (N_{\mathrm{BWP}}^{\mathrm{size,ref}} + 1)/2 \right) \right\rceil$, where $N_{\mathrm{BWP}}^{\mathrm{size,ref}}$ represents a number of RBs occupied by the configured BWP of the reference cell. The first RIV is represented by n, which is associated with the number of RBs $N_{\mathrm{BWP}}^{\mathrm{size,ref}}$ occupied by the configured BWP of the reference cell, $RB_{\mathrm{start,ref}}$ and $L_{\mathrm{RBS, ref}}$, and the specific association manner refers to formula 1 and formula 2. Based on the above association manner, $RB_{\mathrm{start,ref}}$ and $L_{\mathrm{RBS, ref}}$ corresponding to the reference cell are determined.

Except for the reference cell, frequency domain information $RB_{\mathrm{start,c1}}$ and $L_{\mathrm{RBs, c1}}$ of other cells (for example, the first cell c1) are determined based on the following manners. The number of RBs occupied by the configured BWP of the first cell c1 is defined to be equal to $N_{\mathrm{BWP}}^{\mathrm{size,c1}}$.

If $RB_{\mathrm{start,ref}}$ satisfies the following constraint:

$$RB_{\mathrm{start,ref}} = 0, 1, 2, \ldots, (N_{\mathrm{BWP}}^{\mathrm{size,c1}} - 1),$$

then $RB_{\mathrm{start,c1}}$ is the same as the reference cell, that is, $RB_{\mathrm{start,c1}} = RB_{\mathrm{start,ref}}$.

If $RB_{\mathrm{start,ref}}$ does not satisfy the following constraint:

$$RB_{\mathrm{start,ref}} = 0, 1, 2, \ldots, (N_{\mathrm{BWP}}^{\mathrm{size,c1}} - 1),$$

then $RB_{\mathrm{start,c1}} = N_{\mathrm{BWP}}^{\mathrm{size,c1}} - N$, where N represents a preset continuous RB number, and N can be 1.

The corresponding $L_{\mathrm{RBs, c1}}$ is indicated by the $(n_{c0} + 1)$th bit to the $n_{c1}$ th bit corresponding to the FDRA field. Correspondingly, except for the reference cell, the continuous RB number $L_{\mathrm{RBs, ci}}$ of data transmission for the cell ci is indicated by the $(n_{c(i-1)} + 1)$th bit to the $n_{ci}$th bit corresponding to the FDRA field. Except for the reference cell, other cells c0, c1,..., ci are arranged in ascending order based on a cell index value, that is, if ci corresponds to the cell index value, then c0< c1,...,<ci. Alternatively, other cells c0, c1,..., ci are arranged in descending order based on the cell index value, that is, if ci corresponds to the cell index value, then c0>c1,...,>ci. Corresponding to the number of bits $N_{c1}$ of $L_{\mathrm{RBs, c1}}$ indicating the cell c1 is equal to $\left\lceil \log_2 \left( N_{\mathrm{BWP}}^{\mathrm{size,c1}} / N_{\mathrm{RBG}}^{c1} \right) \right\rceil$, that is, $N_{c1} = \left\lceil \log_2 \left( N_{\mathrm{BWP}}^{\mathrm{size,c1}} / N_{\mathrm{RBG}}^{c1} \right) \right\rceil$, the continuous RB number $L_{\mathrm{RBs, c1}}$ is at a granularity of $N_{\mathrm{RBG}}^{c1}$, and a second cell in other cells is similar to the first cell c1, which will not be repeated here. $N_{\mathrm{BWP}}^{\mathrm{size,c1}}$ represents the number of RBs occupied by the configured BWP of the scheduled cell c1. $N_{\mathrm{RBG}}^{c1}$ can be determined through a predefined manner. For example, $N_{\mathrm{RBG}}^{c1} = 1$, $N_{\mathrm{RBG}}^{c1} = 6$. For example, $N_{\mathrm{RBG}}^{c1}$ is equal to a size of the configured RBG of the cell c1. $N_{\mathrm{RBG}}^{c1}$ can be determined through a signaling configuration manner. If the signaling is not configured, $N_{\mathrm{RBG}}^{c1} = 1$ or $N_{\mathrm{RBG}}^{c1} = 6$.

Taking Table 1 and Table 2 as examples, the first $N = \left\lceil \log_2 \left( 8(8 + 1)/2 \right) \right\rceil = 6$ bits in the FDRA field indicate the first RIV of the reference cell. For example, it is indicated that the first RIV n=17, corresponding to $RB_{\mathrm{start,ref}} = 1$, $L_{\mathrm{RBs, ref}} = 3$, $N_{\mathrm{RBG}}^{c1} = 1$, considering that $RB_{\mathrm{start,ref}} = 1$ satisfies the following constraint:

$$RB_{\text{start,ref}} = 0, 1, 2, \ldots, (N_{\text{BWP}}^{\text{size,c1}} - 1),$$

then first three states of last $N_{c1} = \lceil \log_2 4 \rceil = 2$ bits in the FDRA field indicate that $L_{\text{RBs, c1}}$ corresponds to one of 1, 2 or 3, and the last state can be reserved.

In one possible implementation, the terminal receives the multi-cell DCI and parses the first RIV indicated by first N1 bits in the corresponding FDRA field. $N1 = \lceil \log_2 (N_{\text{BWP}}^{\text{size,ref}}(N_{\text{BWP}}^{\text{size,ref}} + 1)/2) \rceil$, where $N_{\text{BWP}}^{\text{size,ref}}$ represents a number of RBs occupied by the configured BWP of the reference cell. The first RIV is represented by n, which is associated with the number of RBs $N_{\text{BWP}}^{\text{size,ref}}$ occupied by the configured BWP of the reference cell, $RB_{\text{start,ref}}$ and $L_{\text{RBs, ref}}$, and the specific association manner refers to formula 1 and formula 2. Based on the above association manner, frequency domain information $RB_{\text{start,ref}}$ and $L_{\text{RBs, ref}}$ corresponding to the reference cell are determined.

Except for the reference cell, frequency domain information $RB_{\text{start,c1}}$ and $L_{\text{RBs, c1}}$ of other cells (for example, the first cell c1) are determined based on the following manners. The number of RBs occupied by the configured BWP of the cell c1 is defined to be equal to $N_{\text{BWP}}^{\text{size,c1}}$.

If a frequency point size corresponding to $RB_{\text{start,ref}}$ configured for the reference cell satisfies the following constraint:

$$RB_{\text{start,ref}} \, \mu_{\text{ref}}/\mu_{c1} = 0, 1, 2, \ldots, (N_{\text{BWP}}^{\text{size,c1}} - 1),$$

then $RB_{\text{start,c1}} = RB_{\text{start,ref}} \, \mu_{\text{ref}}/\mu_{c1}$.

If the frequency point size corresponding to $RB_{\text{start,ref}}$ does not satisfy the following constraint:

$$RB_{\text{start,ref}} \, \mu_{\text{ref}}/\mu_{c1} = 0, 1, 2, \ldots, (N_{\text{BWP}}^{\text{size,c1}} - 1),$$

then $RB_{\text{start,c1}} = N_{\text{BWP}}^{\text{size,c1}} - N$. N represents a preset continuous RB number, and N can be 1.

The corresponding $L_{\text{RBs, c1}}$ is indicated by the $(n_{c0} + 1)$th bit to the $n_{c1}$th bit included in a second bit interval corresponding to the first cell c1 in the FDRA field. Correspondingly, except for the reference cell, $L_{\text{RBs, ci}}$ of the cell ci is indicated by the $(n_{c(i-1)} + 1)$th bit to the $n_{ci}$th bit corresponding to the FDRA field. Except for the reference cell, other cells c0, c1,..., ci are arranged in ascending order based on a cell index value, that is, if ci corresponds to the cell index value, then c0< c1,...,<ci.

Alternatively, other cells c0, c1,..., ci are arranged in descending order based on the cell index value, that is, if ci corresponds to the cell index value, then c0>c1,...,>ci. Corresponding to the number of bits $N_{c1}$ of $L_{\text{RBs, c1}}$ indicating the cell c1 is equal to $\lceil \log_2 (N_{\text{BWP}}^{\text{size,c1}}/N_{\text{RBG}}^{c1}) \rceil$, that is, $N_{c1} = \lceil \log_2 (N_{\text{BWP}}^{\text{size,c1}}/N_{\text{RBG}}^{c1}) \rceil$, and a second cell in other cells is similar to the first cell c1, which will not be repeated here. $N_{\text{BWP}}^{\text{size,c1}}$ represents the number of RBs occupied by the configured BWP of the scheduled cell c1. The continuous RB number $L_{\text{RBs, c1}}$ is at a granularity of $N_{\text{RBG}}^{c1}$. $N_{\text{RBG}}^{c1}$ can be determined through a predefined manner. For example, $N_{\text{RBG}}^{c1} = 1$, $N_{\text{RBG}}^{c1} = 6$. For example, $N_{\text{RBG}}^{c1}$ is equal to a size of the configured RBG of the cell c1. $N_{\text{RBG}}^{c1}$ can be determined through a signaling configuration manner. If the signaling is not configured, $N_{\text{RBG}}^{c1} = 1$ or $N_{\text{RBG}}^{c1} = 6$.

The exemplary descriptions of the solutions can refer to mechanisms in Table 1 and Table 2, and introduce the influence of SCS, which will not be repeated here.

According to this embodiment, by using separate indication manners and designing corresponding indication manners in scenarios where the frequency domain RB starting positions of different cells are defined or frequency domain starting positions correspond to the same frequency domain length, bit overheads of the multi-cell DCI can be effectively reduced on the basis of ensuring scheduling flexibility of the DCI, and the excessive transmission code rate of the multi-cell DCI and the loss of transmission performance of the DCI can be avoided, thereby reducing cell scheduling performance.

Embodiment 4

As described in Embodiment 1, assuming that a terminal is a terminal that supports a Rel-18 version and a subsequent version. The terminal receives DCI for multi-cell scheduling, and receives PDSCHs of a plurality of cells or transmits PUSCHs of the plurality of cells based on indication information corresponding to the DCI.

In this embodiment, multi-cell DCI is used to refer to the DCI for scheduling the multi-cell data transmission. Considering that frequency domain resource information of different scheduled cells indicated by a FDRA field of the multi-cell DCI is based on a type 1 resource type scenario, by designing a corresponding FDRA field indication manner, a single DCI can indicate the frequency domain resource information of multi-cell PDSCH/PUSCH.

In one possible implementation, a reference cell in a multi-cell scheduling scenario is determined. The reference cell can be determined based on a manner indicated by a base station using signaling, for example, indicating a cell identifier of the reference cell. The reference cell can also be determined in a predefined manner, for example, taking a cell where the multi-cell DCI is received as the reference cell, or taking a cell corresponding to a largest number of RBs occupied by a configured BWP of a scheduled cell as the reference cell, or taking a cell corresponding to a smallest number of RBs occupied by the configured BWP of the scheduled cell as the reference cell, or taking a cell with a maximum or minimum cell index value of the scheduled cell as the reference cell, which is not limited by the present disclosure.

In one possible implementation, the terminal receives the multi-cell DCI and parses the first RIV of the reference cell indicated by first N1 bits in the corresponding FDRA field. $N1 = \left\lceil \log_2 \left( N_{BWP}^{size,ref} (N_{BWP}^{size,ref} + 1)/2 \right) \right\rceil$, where $N_{BWP}^{size,ref}$ represents a number of RBs occupied by the configured BWP of the reference cell. The first RIV can be represented by n, which is associated with the number of RBs $N_{BWP}^{size,ref}$ occupied by the configured BWP of the reference cell, $RB_{start,ref}$ and $L_{RBs, ref}$, and the specific association manner refers to formula 1 and formula 2. Based on the above association manner, frequency domain information $RB_{start,ref}$ and $L_{RBs, ref}$ corresponding to the reference cell are determined.

Except for the reference cell, frequency domain information $RB_{start,c1}$ and $L_{RBs, c1}$ of other cells (for example, the first cell c1) are determined based on the following manners. The number of RBs occupied by the configured BWP of the cell c1 is defined to be equal to $N_{BWP}^{size,c1}$.

If $L_{RBs, ref}$ satisfies the following constraint:

$$1 \leq L_{RBs, ref} \leq N_{BWP}^{size,c1},$$

then $L_{RBs, c1}$ is the same as the reference cell, that is, $L_{RBs, c1} = L_{RBs, ref}$.

If $L_{RBs, ref}$ does not satisfy the following constraint:

$$1 \leq L_{RBs, ref} \leq N_{BWP}^{size,c1},$$

then $L_{RBs, c1} = N_{BWP}^{size,c1}$.

The corresponding $RB_{start,c1}$ is indicated by the $(n_{c0} + 1)$ th bit to the $n_{c1}$ th bit corresponding to the FDRA field. Correspondingly, except for the reference cell, $RB_{start, ci}$ of the cell ci is indicated by the $(n_{c(i-1)} + 1)$th bit to the $n_{ci}$th bit corresponding to the FDRA field. Except for the reference cell, other cells c0, c1,..., ci are arranged in ascending order based on cell index values, that is, if ci corresponds to the cell index value, then c0<c1,...,<ci.

Alternatively, other cells c0, c1,..., ci are arranged in descending order based on the cell index values, that is, if ci corresponds to the cell index value, then c0>c1,...,>ci. Corresponding to the number of bits $N_{c1}$ of $RB_{start,c1}$ indicating the cell c1 being equal to $\left\lceil \log_2 \left( N_{BWP}^{size,c1} / N_{RBG}^{c1} \right) \right\rceil$, that is, $N_{c1} = \left\lceil \log_2 \left( N_{BWP}^{size,c1} / N_{RBG}^{c1} \right) \right\rceil$. The RB starting position $RB_{start,ref}$ is at a granularity of $N_{RBG}^{c1}$, and a second cell in other cells is similar to the first cell c1, which will not be repeated here. $N_{RBG}^{c1}$ can be determined through a predefined manner. For example, $N_{RBG}^{c1} = 1$, $N_{RBG}^{c1} = 6$. For example,

$N_{RBG}^{c1}$ is equal to a size of the configured RBG of the cell c1. $N_{RBG}^{c1}$ can be determined through a signaling configuration manner. If the signaling is not configured, $N_{RBG}^{c1} = 1$ or $N_{RBG}^{c1} = 6$.

Taking Table 1 and Table 2 as examples, the first $N = \lceil \log_2 (8(8+1)/2) \rceil = 6$ bits in the FDRA field indicate the first RIV corresponding to the reference cell. For example, it is indicated that n=17, corresponding to $RB_{start,ref} = 1$, $L_{RBs,\ ref} = 3$, considering that $L_{RBs,\ ref} = 3$ satisfies the following constraint:

$$1 \leq L_{RBs,\ ref} \leq N_{BWP}^{size,c1},$$

then two states of last $N_{c1} = \lceil \log_2 (4 - 3 + 1) \rceil = 1$ bit in the FDRA field indicate that $RB_{start,c1}$ corresponds to one of 0 or 1.

In one possible implementation, the terminal receives the multi-cell DCI and parses the first RIV of the reference cell indicated by first N1 bits in the corresponding FDRA field. $N1 = \lceil \log_2 (N_{BWP}^{size,ref}(N_{BWP}^{size,ref} + 1)/2) \rceil$, where $N_{BWP}^{size,ref}$ represents a number of RBs occupied by the configured BWP of the reference cell. The first RIV is represented by n, which is associated with the number of RBs $N_{BWP}^{size,ref}$ occupied by the configured BWP of the reference cell, $RB_{start,ref}$ and $L_{RBs,\ ref}$, and the specific association manner refers to formula 1 and formula 2. Based on the above association manner, the frequency domain information $RB_{start,ref}$ and $L_{RBs,\ ref}$ corresponding to the reference cell are determined.

Except for the reference cell, frequency domain information $RB_{start,c1}$ and $L_{RBs,\ c1}$ of other cells (for example, the first cell c1) are determined based on the following manners. The number of RBs occupied by the configured BWP of the cell c1 is defined to be equal to $N_{BWP}^{size,c1}$.

If a frequency point size corresponding to $L_{RBs,\ ref}$ satisfies the following constraint:

$$1 \leq L_{RBs,\ ref}\mu_{ref}/\mu_{c1} \leq N_{BWP}^{size,c1},$$

then $L_{RBs,\ c1} = L_{RBs,\ ref}\ \mu_{ref}/\mu_{c1}$.

If a frequency point size corresponding to $L_{RBs,\ ref}$ does not satisfy the following constraint:

$$1 \leq L_{RBs,\ ref}\mu_{ref}/\mu_{c1} \leq N_{BWP}^{size,c1},$$

then $L_{RBs,\ c1} = N_{BWP}^{size,c1}$.

The corresponding $RB_{start,c1}$ is indicated by the $(n_{c0} + 1)$ th bit to the $n_{c1}$ th bit corresponding to the FDRA field. Correspondingly, except for the reference cell, $RB_{start,\ ci}$ of the cell ci is indicated by the $(n_{c(i-1)} + 1)$th bit to the $n_{ci}$th bit corresponding to the FDRA field. Except for the reference cell, other cells c0, c1,..., ci are arranged in ascending order based on cell index values, that is, if ci corresponds to the cell index value, then c0<c1,...,<ci.

Alternatively, other cells c0, c1,..., ci are arranged in descending order based on the cell index values, that is, if ci corresponds to the cell index value, then c0>c1,...,>ci. Corresponding to the number of bits $N_{c1}$ of $RB_{start,c1}$ indicating the cell c1 being equal to $\lceil \log_2 (N_{BWP}^{size,c1} / N_{RBG}^{c1}) \rceil$, that is, $N_{c1} = \lceil \log_2 (N_{BWP}^{size,c1} / N_{RBG}^{c1}) \rceil$, the RB starting position $RB_{start,ref}$ is at a granularity of $N_{RBG}^{c1}$, and the other cells are similar to the cell c1, which will not be repeated here. $N_{RBG}^{c1}$ can be determined through a predefined manner. For example, $N_{RBG}^{c1} = 1$, $N_{RBG}^{c1} = 6$. For example, $N_{RBG}^{c1}$ is equal to a size of the configured RBG of the cell c1. $N_{RBG}^{c1}$ can be determined through a signaling configuration manner. If the signaling is not configured, $N_{RBG}^{c1} = 1$ or $N_{RBG}^{c1} = 6$.

The exemplary descriptions of the solutions can refer to mechanisms in Table 1 and Table 2, and introduce the influence of SCS, which will not be repeated here.

This embodiment adopts separate indication manners and designs corresponding indication manners in scenarios where the frequency domain occupied by different cells has the same number of RBs or frequency domain range length, bit overheads of the multi-cell DCI can be effectively reduced, and the excessive transmission code rate of the multi-cell DCI and the loss of transmission performance of the DCI can be avoided, thereby reducing cell scheduling performance.

Corresponding to the foregoing embodiments of application function implementation methods, the present disclosure further provides embodiments of application function implementation apparatuses.

Referring to FIG. 8, FIG. 8 is a block diagram of a resource determining apparatus according to an exemplary embodiment of the present disclosure. The apparatus is applied to a terminal and includes:

a receiving module 801, configured to receive downlink control information (DCI) sent by a base station, where the DCI is configured to schedule data transmission for a plurality of cells;

a first determining module 802, configured to determine at least frequency domain resources corresponding to a reference cell in the plurality of cells based on a frequency domain resource allocation (FDRA) field in the DCI; and

a second determining module 803, configured to determine frequency domain resources corresponding to one or more other cells in the plurality of cells at least based on the frequency domain resources corresponding to the reference cell.

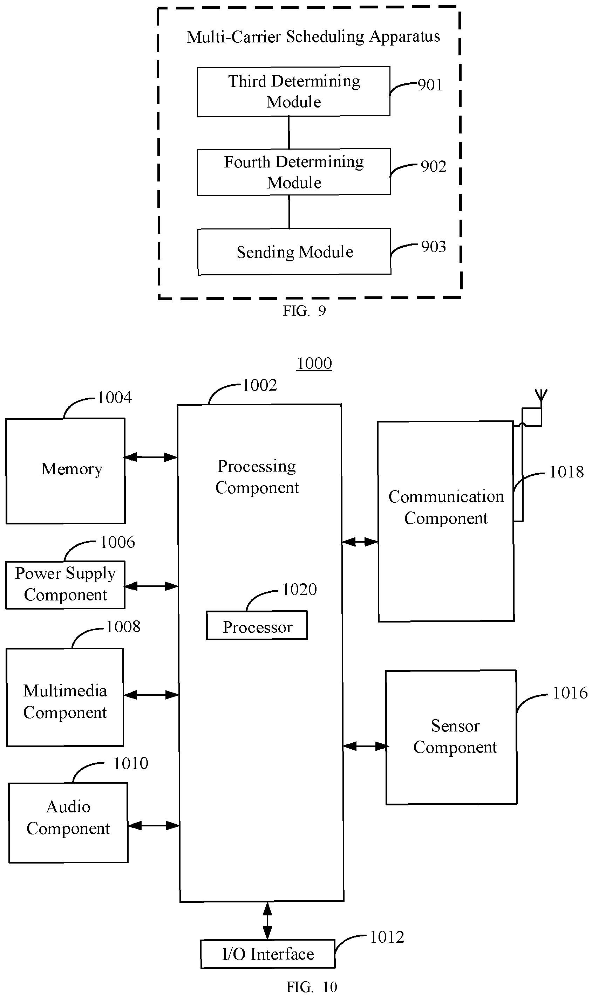

Referring to FIG. 9, FIG. 9 is a block diagram of a multi-carrier scheduling apparatus according to an exemplary embodiment of the present disclosure. The apparatus applied to a base station and includes:

a third determining module 901, configured to determine frequency domain resources for data transmission of a terminal in each of a plurality of cells;

a fourth determining module 902, configured to determine a bit value indicated by a bit included in a frequency domain resource allocation (FDRA) field in downlink control information (DCI) at least based on frequency domain resources corresponding to a reference cell in the plurality of cells; and

a sending module 903, configured to send the DCI to the terminal.

For the apparatus embodiments, since they basically correspond to the method embodiments, reference may be made to part of the description of the method embodiments for the relevant portions. The apparatus embodiments as described above are merely illustrative, where units described above as separated components may or may not be physically separated, and components shown as units may or may not be physical units, i.e., may be located in one place, or may be distributed over a plurality of network units. Some or all of the modules may be selected according to actual needs to achieve the purpose of the disclosed solution. Those ordinary skilled in the art can understand and implement it without any creative efforts.

Correspondingly, the present disclosure further provides a computer-readable storage medium storing a computer program for executing any of the resource determining methods described above on the terminal side.

Correspondingly, the present disclosure further provides a computer-readable storage medium storing a computer program for executing any of the multi-carrier scheduling methods described above on the base station side.

Correspondingly, the present disclosure further provides a multi-carrier scheduling apparatus, including:

one or more processors; and

a memory configured to store instructions executable by the one or more processors;

where the processors are configured to perform any of the resource determining methods described above on the terminal side.

FIG. 10 is a block diagram of a resource determining apparatus 1000 according to an exemplary embodiment. For example, the apparatus 1000 may be a terminal such as a mobile phone, a tablet computer, an e-book reader, a multimedia playback device, a wearable device, a vehicle-mounted user equipment, an iPad, a smart TV, or the like.

Referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1016, and a communication component 1018.

The processing component 1002 generally controls the overall operations of the apparatus 1000, such as operations associated with display, telephone calls, data random access, camera operations, and recording operations. The processing component 1002 may include one or more processors 1020 to execute instructions to complete all or part of the steps of the above resource determining methods. Additionally, the processing component 1002 may include one or more modules that facilitate interaction between the processing component 1002 and other components. For example, the processing component 1002 may include a multimedia module to facilitate interaction between the multimedia component 1008 and the processing component 1002. As another example, the processing component 1002 can read executable instructions from the memory to implement the steps of the resource determining method provided in the above embodiments.

The memory 1004 is configured to store various types of data to support operations on the apparatus 1000. Examples of the data include instructions for any application or method operating on the apparatus 1000, contact data, phone book data, messages, pictures, videos, or the like. The memory 1004 can be implemented in any type of volatile or non-volatile storage device, or a combination thereof, such as a static random access memory (SRAM), an electrically erasable programmable read-only memory (EEPROM), an erasable Programmable read-only memory (EPROM), a programmable read-only memory (PROM), a read-only memory (ROM), a magnetic memory, a flash memory, a magnetic disk or an optical disk.

The power supply component 1006 provides power to various components of the apparatus 1000. The power supply component 1006 may include a power management system, one or more power supplies, and other components associated with generating, managing, and distributing power for the apparatus 1000.

The multimedia component 1008 includes a display screen that provides an output interface between the apparatus 1000 and the user. In some embodiments, the multimedia component 1008 includes a front-facing camera and/or a rear-facing camera. When the apparatus 1000 is in an operating mode, such as a shooting mode or a video mode, the front-facing camera and/or the rear-facing camera may receive external multimedia data. Each of the front-facing camera and the rear-facing camera can be a fixed optical lens system or have a focal length and optical zoom capabilities.

The audio component 1010 is configured to output and/or input audio signals. For example, the audio component 1010 includes a microphone (MIC). When the apparatus 1000 is in an operation mode, such as a call mode, a recording mode or a voice recognition mode, the microphone is configured to receive external audio signals. The received audio signals may be further stored in the memory 1004 or sent via the communication component 1018. In some embodiments, the audio component 1010 further includes a speaker for outputting the audio signals.

The I/O interface 1012 provides an interface between the processing component 1002 and a peripheral interface module. The peripheral interface module may be a keyboard, a click wheel, a button, or the like. The button may include but is not limited to a home button, a volume button, a start button, and a lock button.

The sensor component 1016 includes one or more sensors for providing various state evaluations for the apparatus 1000. For example, the sensor component 1016 can detect an on/off state of the apparatus 1000 and relative positioning of a component such as a display or a keypad of the apparatus 1000. The sensor component 1016 can also detect a position change of the apparatus 1000 or a component of the apparatus 1000, presence or absence of contact with the apparatus 1000 by the user, orientation or acceleration/deceleration of the apparatus 1000, and temperature changes of the apparatus 1000. The sensor component 1016 may include a proximity sensor configured to detect presence of a nearby object without any physical contact. The sensor component 1016 may also include an optical sensor, such as a CMOS or CCD image sensor, for use in imaging applications. In some embodiments, the sensor component 1016 may also include an acceleration sensor, a gyroscope sensor, a magnetic sensor, a pressure sensor or a temperature sensor.

The communication component 1018 is configured to facilitate wired or wireless communication between the apparatus 1000 and other devices. The apparatus 1000 can access a wireless network based on a communication standard, such as a Wi-Fi, 2G, 3G, 4G, 5G, 6G or a combination thereof. In an exemplary embodiment, the communication component 1018 receives a broadcast signal or broadcast related information from an external broadcast management system via a broadcast channel. In an exemplary embodiment, the communication component 1018 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology or other technologies.

In an exemplary embodiment, the apparatus 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform any one of the resource determining methods on the terminal side.

In an exemplary embodiment, there is also provided a non-transitory computer-readable storage medium including instructions, such as the memory 1004 including instructions. The instructions can be executed by the processor 1020 of the apparatus 1000 to carry out the foregoing resource determining methods. For example, the non-transitory computer-readable storage medium may be a ROM, a random access memory (RAM), a CD-ROM, a magnetic tape, a floppy disk, an optical data storage device, or the like.

Correspondingly, the present disclosure further provides a multi-carrier scheduling apparatus, including:

one or more processors; and
a memory configured to store instructions executable by the one or more processors;

where the processors are configured to perform any of the multi-carrier scheduling methods described above on the base station side.

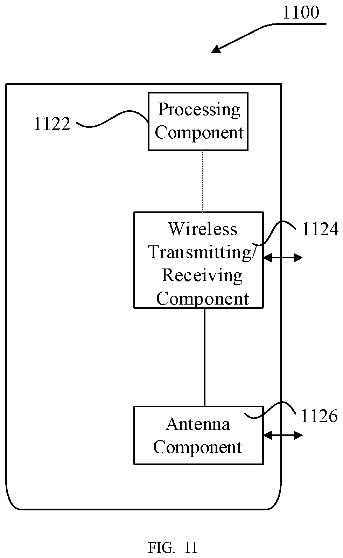

As shown in FIG. 11, FIG. 11 is a schematic structural diagram of a multi-carrier scheduling apparatus 1100 according to an exemplary embodiment. The apparatus 1100 may be provided as a base station. Referring to FIG. 11, the apparatus 1100 includes a processing component 1122, a wireless transmitting/receiving component 1124, an antenna component 1126, and a signal processing part specific to a wireless interface. The processing component 1122 may further include at least one processor.

One of the processors in the processing component 1122 may be configured to perform any one of the multi-carrier scheduling methods on the base station side described above.

After considering the description and practicing the present disclosure disclosed herein, those skilled in the art will readily contemplate other embodiments of the present disclosure. The present disclosure is intended to cover any variations, uses, or adaptions of the present disclosure that conform to the general principles of the present disclosure and include common knowledge or conventional technical means in the technical field which are not disclosed in the present disclosure. It is intended that the description and embodiments shall be considered as illustrative only, and the true scope and spirit of the present disclosure are indicated by the appended claims.

It should be understood that the present disclosure is not limited to the precise structures that have been described above and shown in the accompanying drawings, and various modifications and changes can be made without departing from the scope thereof. The scope of the present disclosure is defined only by the appended claims.

**Claims**

1. A resource determining method, performed by a terminal, the method comprising:

   receiving downlink control information (DCI) sent by a base station, wherein the DCI is configured to schedule data transmission for a plurality of cells;
   determining at least frequency domain resources corresponding to a reference cell in the plurality of cells based on a frequency domain resource allocation (FDRA) field in the DCI; and
   determining frequency domain resources corresponding to one or more other cells in the plurality of cells at least based on the frequency domain resources corresponding to the reference cell.

2. The method according to claim 1, wherein the FDRA field is configured to indicate a first resource indication value (RIV) of the reference cell.

3. The method according to claim 2, wherein determining the at least frequency domain resources corresponding to the reference cell in the plurality of cells based on the FDRA field in the DCI comprises:

   determining a first start resource block (RB) index value and a first continuous RB number for data transmission for the reference cell based on the first RIV;
   wherein determining the frequency domain resources corresponding to the one or more other cells in the plurality of cells at least based on the frequency domain resources corresponding to the reference cell comprises:

   determining a second start RB index value for data transmission for a first cell based on the first start RB index value, wherein the first cell is any one of the one or more other cells; and
   determining a second continuous RB number for the data transmission for the first cell based on the second start RB index value and the first continuous RB number.

4. The method according to claim 3, wherein determining the second start RB index value for the data transmission for the first cell based on the first start RB index value comprises:

   in a case where the first start RB index value is less than a first RB number, determining that the second start RB index value is equal to the first start RB index value, wherein the first RB number is a number of RBs occupied by a bandwidth part (BWP) configured for the first cell;
   in a case where the first start RB index value is greater than or equal to the first RB number, determining that the second start RB index value is equal to a first difference value, wherein the first difference is a difference between the first RB number and a preset continuous RB number.

**5.** The method according to claim 3 or 4, wherein determining the second continuous RB number for the data transmission for the first cell based on the second start RB index value and the first continuous RB number comprises:

in a case where the first continuous RB number is less than or equal to a second difference, determining that the second continuous RB number is equal to the first continuous RB number, wherein the second difference is a difference between the first RB number and the second start RB index value;
in a case where the first continuous RB number is greater than the second difference, determining that the second continuous RB number is equal to the second difference.

**6.** The method according to claim 2, wherein determining the frequency domain resources corresponding to the one or more other cells in the plurality of cells at least based on the frequency domain resources corresponding to the reference cell comprises:

determining a second RIV of a first cell based on the first RIV and a maximum RIV of the first cell, wherein the maximum RIV of the first cell is determined based on a number of RBs occupied by a bandwidth part (BWP) configured for the first cell, and the first cell is any one of the one or more other cells; and
determining frequency domain resources for data transmission for the first cell based on the second RIV.

**7.** The method according to claim 6, wherein determining the second RIV of the first cell based on the first RIV and the maximum RIV of the first cell comprises:

in a case where the first RIV is less than or equal to the maximum RIV of the first cell, determining that the second RIV is equal to the first RIV;
in a case where the first RIV is greater than the maximum RIV of the first cell, determining that the second RIV is equal to a preset RIV.

**8.** The method according to claim 1, wherein the FDRA field is configured to indicate:

a first resource indication value (RIV) of the reference cell; and
a continuous resource block (RB) number for data transmission for each of the one or more other cells.

**9.** The method according to claim 8, wherein determining the at least frequency domain resources corresponding to the reference cell in the plurality of cells based on the FDRA field in the DCI comprises:

determining the first RIV based on a bit value indicated by a bit comprised in a first bit interval in the FDRA field; and
determining a first start RB index value and a first continuous RB number for data transmission for the reference cell based on the first RIV;
wherein determining the frequency domain resources corresponding to the one or more other cells in the plurality of cells at least based on the frequency domain resources corresponding to the reference cell comprises:

determining a second start RB index value for data transmission for a first cell based on the first start RB index value, wherein the first cell is any one of the one or more other cells; and
determining a second continuous RB number for the data transmission for the first cell based on a bit value indicated by a bit comprised in a second bit interval corresponding to the first cell in the FDRA field.

**10.** The method according to claim 9, wherein determining the second start RB index value for the data transmission for the first cell based on the first start RB index value comprises:

in a case where the first start RB index value is less than a first RB number, determining that the second start RB index value is equal to the first start RB index value, wherein the first RB number is a number of RBs occupied by a bandwidth part (BWP) configured for the first cell;
in a case where the first start RB index value is greater than or equal to the first RB number, determining that the second start RB index value is equal to a first difference value, wherein the first difference is a difference between the first RB number and a preset continuous RB number.

**11.** The method according to claim 1, wherein the FDRA field is configured to indicate:

a first resource indication value (RIV) of the reference cell; and

a start resource block (RB) index value for data transmission for each of the one or more other cells.

12. The method according to claim 11, wherein determining the at least frequency domain resources corresponding to the reference cell in the plurality of cells based on the FDRA field in the DCI comprises:

determining the first RIV based on a bit value indicated by a bit comprised in a first bit interval in the FDRA field; and
determining a first start RB index value and a first continuous RB number for data transmission for the reference cell based on the first RIV;
wherein determining the frequency domain resources corresponding to the one or more other cells in the plurality of cells at least based on the frequency domain resources corresponding to the reference cell comprises:

determining a second continuous RB number for data transmission for a first cell based on the first continuous RB number, wherein the first cell is any one of the one or more other cells; and
determining a second start RB index value for the data transmission for the first cell based on a bit value indicated by a bit comprised in a second bit interval corresponding to the first cell in the FDRA field.

13. The method according to claim 12, wherein determining the second continuous RB number for the data transmission for the first cell based on the first continuous RB number comprises:

in a case where the first continuous RB number is less than or equal to a first RB number, determining that the second continuous RB number is equal to the first continuous RB number, wherein the first RB number is a number of RBs occupied by a bandwidth part (BWP) configured for the first cell;
in a case where the first continuous RB number is greater than the first RB number, determining that the second continuous RB number is equal to the first RB number.

14. The method according to claim 9 or 12, wherein in the FDRA field, the first bit interval is before other bit intervals;
in a case where the one or more other cells comprise a plurality of cells, an order of the second bit interval corresponding to the first cell in the FDRA field relative to a third bit interval corresponding to a second cell is same as a preset arrangement order of a cell index value of the first cell relative to a cell index value of the second cell, wherein the second cell is any one of the one or more other cells that is different from the first cell.

15. The method according to claim 14, wherein the first bit interval occupies a first bit number of bits;
wherein the first bit number is equal to a minimum bit number that needs to be occupied when indicating all optional values of the first RIV.

16. The method according to claim 14, wherein the second bit interval occupies a second bit number of bits;
wherein the second bit number is equal to a minimum bit number that needs to be occupied when indicating all optional values of the second start RB index value or all optional values of the second continuous RB number.

17. The method according to claim 1, further comprising any one of:

taking a cell receiving the DCI among the plurality of cells as the reference cell;
taking a cell with a largest number of resource blocks (RBs) occupied by a configured bandwidth part (BWP) among the plurality of cells as the reference cell;
taking a cell with a smallest number of RBs occupied by a configured BWP among the plurality of cells as the reference cell;
taking a cell with a largest cell index number among the plurality of cells as the reference cell; or
taking a cell with a smallest cell index number among the plurality of cells as the reference cell.

18. A multi-carrier scheduling method, performed by a base station, the method comprising:

determining frequency domain resources for data transmission of a terminal in each of a plurality of cells;
determining a bit value indicated by a bit comprised in a frequency domain resource allocation (FDRA) field in downlink control information (DCI) at least based on frequency domain resources corresponding to a reference cell in the plurality of cells; and
sending the DCI to the terminal.

19. The method according to claim 18, wherein determining the frequency domain resources for the data transmission of the terminal in each of the plurality of cells comprises:

determining a first start resource block (RB) index value and a first continuous RB number for data transmission of the terminal in the reference cell;

determining a second start RB index value for data transmission of the terminal in a first cell based on the first start RB index value, wherein the first cell is any one of one or more other cells in the plurality of cells; and

determining a second continuous RB number for the data transmission of the terminal in the first cell based on the second start RB index value and the first continuous RB number.

20. The method according to claim 19, wherein determining the second start RB index value for the data transmission of the terminal in the first cell based on the first start RB index value comprises:

in a case where the first start RB index value is less than a first RB number, determining that the second start RB index value is equal to the first start RB index value, wherein the first RB number is a number of RBs occupied by a bandwidth part (BWP) configured for the first cell;

in a case where the first start RB index value is greater than or equal to the first RB number, determining that the second start RB index value is equal to a first difference value, wherein the first difference is a difference between the first RB number and a preset continuous RB number.

21. The method according to claim 20, wherein determining the second continuous RB number for the data transmission of the terminal in the first cell based on the second start RB index value and the first continuous RB number comprises:

in a case where the first continuous RB number is less than or equal to a second difference, determining that the second continuous RB number is equal to the first continuous RB number, wherein the second difference is a difference between the first RB number and the second start RB index value;

in a case where the first continuous RB number is greater than the second difference, determining that the second continuous RB number is equal to the second difference.

22. The method according to claim 18, wherein determining the frequency domain resources for the data transmission of the terminal in each of the plurality of cells comprises:

determining a first resource indication value (RIV) of the terminal in the reference cell;

determining a second RIV of a first cell based on the first RIV and a maximum RIV of the first cell, wherein the maximum RIV of the first cell is determined based on a number of RBs occupied by a bandwidth part (BWP) configured for the first cell, and the first cell is any one of one or more other cells in the plurality of cells; and

determine frequency domain resources for data transmission for the first cell based on the second RIV.

23. The method according to claim 22, wherein determining the second RIV of the first cell based on the first RIV and the maximum RIV of the first cell comprises:

in a case where the first RIV is less than or equal to the maximum RIV of the first cell, determining that the second RIV is equal to the first RIV;

in a case where the first RIV is greater than the maximum RIV of the first cell, determining that the second RIV is equal to a preset RIV.

24. The method according to any one of claims 19 to 23, wherein the FDRA field is configured to indicate:

a first resource indication value (RIV) of the reference cell;

wherein determining the bit value indicated by the bit comprised in the FDRA field in the DCI at least based on the frequency domain resources corresponding to the reference cell in the plurality of cells comprises:

determining the bit value indicated by the bit comprised in the FDRA field based on the first RIV, wherein the first RIV is associated with the first start RB index value and the first continuous RB number for the reference cell.

25. The method according to claim 18, wherein determining the frequency domain resources for the data transmission of the terminal in each of the plurality of cells comprises:

determining a first start resource block (RB) index value and a first continuous RB number for data transmission of the terminal in the reference cell;

determining a second start RB index value for data transmission of the terminal in a first cell based on the first start RB index value, wherein the first cell is any one of one or more other cells in the plurality of cells; and
determining a second continuous RB number for the data transmission of the terminal in the first cell.

26. The method according to claim 25, wherein determining the second start RB index value for the data transmission of the terminal in the first cell based on the first start RB index value comprises:

in a case where the first start RB index value is less than a first RB number, determining that the second start RB index value is equal to the first start RB index value, wherein the first RB number is a number of RBs occupied by a bandwidth part (BWP) configured for the first cell;
in a case where the first start RB index value is greater than or equal to the first RB number, determining that the second start RB index value is equal to a first difference value, wherein the first difference is a difference between the first RB number and a preset continuous RB number.

27. The method according to claim 26, wherein the FDRA field is configured to indicate:

a first resource indication value (RIV) of the reference cell; and
a continuous RB number for data transmission for each of the one or more other cells;
wherein determining the bit value indicated by the bit comprised in the FDRA field in the DCI at least based on the frequency domain resources corresponding to the reference cell in the plurality of cells comprises:

determining a bit value indicated by a bit comprised in a first bit interval in the FDRA field based on the first RIV, wherein the first RIV is associated with the first start RB index value and the first continuous RB number; and
determining a bit value indicated by a bit comprised in a second bit interval corresponding to the first cell in the FDRA field based on the second continuous RB number.

28. The method according to claim 18, wherein determining the frequency domain resources for the data transmission of the terminal in each of the plurality of cells comprises:

determining a first start resource block (RB) index value and a first continuous RB number for data transmission of the terminal in the reference cell;
determining a second continuous RB number for data transmission of the terminal in a first cell based on the first continuous RB number, wherein the first cell is any one of one or more other cells in the plurality of cells; and
determining a second start RB index value for the data transmission of the terminal in the first cell.

29. The method according to claim 28, wherein determining the second continuous RB number for the data transmission of the terminal in the first cell based on the first continuous RB number comprises:

in a case where the first continuous RB number is less than or equal to a first RB number, determining that the second continuous RB number is equal to the first continuous RB number, wherein the first RB number is a number of RBs occupied by a bandwidth part (BWP) configured for the first cell;
in a case where the first continuous RB number is greater than the first RB number, determining that the second continuous RB number is equal to the first RB number.

30. The method according to claim 29, wherein the FDRA field is configured to indicate:

a first resource indication value (RIV) of the reference cell; and
a start RB index value for data transmission for each of the one or more other cells;
wherein determining the bit value indicated by the bit comprised in the FDRA field in the DCI at least based on the frequency domain resources corresponding to the reference cell in the plurality of cells comprises:

determining a bit value indicated by a bit comprised in a first bit interval in the FDRA field based on the first RIV, wherein the first RIV is associated with the first start RB index value and the first continuous RB number; and
determining a bit value indicated by a bit comprised in a second bit interval corresponding to the first cell in the FDRA field based on the second start RB index value.

31. The method according to claim 27 or 30, wherein in the FDRA field, the first bit interval is before other bit intervals;
in a case where the one or more other cells comprise a plurality of cells, an order of the second bit interval corresponding to the first cell in the FDRA field relative to a third bit interval corresponding to a second cell is same as a preset arrangement order of a cell index value of the first cell relative to a cell index value of the second cell, wherein the second cell is any one of the one or more other cells that is different from the first cell.

32. The method according to claim 31, wherein the first bit interval occupies a first bit number of bits; wherein the first bit number is equal to a minimum bit number that needs to be occupied when indicating all optional values of the first RIV.

33. The method according to claim 31, wherein the second bit interval occupies a second bit number of bits; wherein the second bit number is equal to a minimum bit number that needs to be occupied when indicating all optional values of the second start RB index value or all optional values of the second continuous RB number.

34. The method according to claim 18, further comprising any one of:

    taking a cell receiving the DCI among the plurality of cells as the reference cell;
    taking a cell with a largest number of resource blocks (RBs) occupied by a configured bandwidth part (BWP) among the plurality of cells as the reference cell;
    taking a cell with a smallest number of RBs occupied by a configured BWP among the plurality of cells as the reference cell;
    taking a cell with a largest cell index number among the plurality of cells as the reference cell; or
    taking a cell with a smallest cell index number among the plurality of cells as the reference cell.

35. A resource determining apparatus, applied to a terminal, the apparatus comprising:

    a receiving module, configured to receive downlink control information (DCI) sent by a base station, wherein the DCI is configured to schedule data transmission for a plurality of cells;
    a first determining module, configured to determine at least frequency domain resources corresponding to a reference cell in the plurality of cells based on a frequency domain resource allocation (FDRA) field in the DCI; and
    a second determining module, configured to determine frequency domain resources corresponding to one or more other cells in the plurality of cells at least based on the frequency domain resources corresponding to the reference cell.

36. A multi-carrier scheduling apparatus, applied to a base station, the apparatus comprising:

    a third determining module, configured to determine frequency domain resources for data transmission of a terminal in each of a plurality of cells;
    a fourth determining module, configured to determine a bit value indicated by a bit comprised in a frequency domain resource allocation (FDRA) field in downlink control information (DCI) at least based on frequency domain resources corresponding to a reference cell in the plurality of cells; and
    a sending module, configured to send the DCI to the terminal.

37. A computer-readable storage medium storing a computer program for executing the method according to any one of claims 1 to 17.

38. A computer-readable storage medium storing a computer program for executing the method according to any one of claims 18 to 34.

39. A resource determining apparatus, comprising:

    one or more processors; and
    a memory configured to store instructions executable by the one or more processors;
    wherein the processors are configured to perform the method according to any one of claims 1 to 17.

40. A multi-carrier scheduling apparatus, comprising:

    one or more processors; and
    a memory configured to store instructions executable by the one or more processors;
    wherein the processors are configured to perform the method according to any one of claims 18 to 34.

FIG. 1A

FIG. 1B

Receive DCI sent by a base station, where the DCI is configured to schedule data transmission for a plurality of cells — 201

Determine at least frequency domain resources corresponding to a reference cell in the plurality of cells based on a FDRA field in the DCI — 202

Determine frequency domain resources corresponding to one or more other cells in the plurality of cells at least based on the frequency domain resources corresponding to the reference cell — 203

FIG. 2

Receive DCI sent by a base station, where the DCI is configured to schedule data transmission for a plurality of cells — 301

Determine a first RIV of a reference cell in the plurality of cells based on a FDRA field in the DCI — 302

Determine a first start RB index value and a first continuous RB number for data transmission for the reference cell based on the first RIV — 303

Determine a second start RB index value for data transmission for a first cell based on the first start RB index value — 304

Determine a second continuous RB number for the data transmission for the first cell based on the second start RB index value and the first continuous RB number — 305

FIG. 3A

Receive DCI sent by a base station, where the DCI is configured to schedule data transmission for a plurality of cells — 301'

Determine a first RIV of a reference cell in the plurality of cells based on a FDRA field in the DCI — 302'

Determine a first start RB index value and a first continuous RB number for data transmission for the reference cell based on the first RIV — 303'

Determine a second start RB index value for data transmission for a first cell based on a SCS of the reference cell, a SCS of the first cell, and the first start RB index value — 304'

Determine a second continuous RB number for the data transmission for the first cell based on the SCS of the reference cell, the SCS of the first cell, the second start RB index value, and the first continuous RB number — 305'

FIG. 3B

Receive DCI sent by a base station, where the DCI is configured to schedule data transmission for a plurality of cells — 401

Determine a first RIV of a reference cell in the plurality of cells based on a FDRA field in the DCI — 402

Determine a second RIV of a first cell based on the first RIV and a maximum RIV of the first cell — 403

Determine frequency domain resources for data transmission for the first cell based on the second RIV — 404

FIG. 4

Receive DCI sent by a base station, where the DCI is configured to schedule data transmission for a plurality of cells — 501

Determine a first RIV of a reference cell in the plurality of cells based on a bit value indicated by a bit included in a first bit interval in a FDRA field — 502

Determine a first start RB index value and a first continuous RB number of the reference cell based on the first RIV — 503

Determine a second start RB index value for data transmission for a first cell based on the first start RB index value — 504

Determine a second continuous RB number for the data transmission for the first cell based on a bit value indicated by a bit included in a second bit interval corresponding to the first cell in the FDRA field — 505

FIG. 5A

Receive DCI sent by a base station, where the DCI is configured to schedule data transmission for a plurality of cells — 501'

Determine a first RIV of a reference cell in the plurality of cells based on a bit value indicated by a bit included in a first bit interval in a FDRA field — 502'

Determine a first start RB index value and a first continuous RB number for data transmission for the reference cell based on the first RIV — 503'

Determine a second start RB index value for data transmission for a first cell based on a SCS of the reference cell, a SCS of the first cell, and the first start RB index value — 504'

Determine a second continuous RB number for the data transmission for the first cell based on a bit value indicated by a bit included in a second bit interval corresponding to the first cell in the FDRA field — 505'

FIG. 5B

Receive DCI sent by a base station, where the DCI is configured to schedule data transmission for a plurality of cells — 601

Determine a first RIV of a reference cell in the plurality of cells based on a bit value indicated by a bit included in a first bit interval in a FDRA field — 602

Determine a first start RB index value and a first continuous RB number for data transmission for the reference cell based on the first RIV — 603

Determine a second continuous RB number for data transmission for a first cell based on the first continuous RB number — 604

Determine a second start RB index value for the data transmission for the first cell based on a bit value indicated by a bit included in a second bit interval corresponding to the first cell in the FDRA field — 605

FIG. 6A

Receive DCI sent by a base station, where the DCI is configured to schedule data transmission for a plurality of cells — 601'

Determine a first RIV of a reference cell in the plurality of cells based on a bit value indicated by a bit included in a first bit interval in a FDRA field — 602'

Determine a first start RB index value and a first continuous RB number for data transmission for the reference cell based on the first RIV — 603'

Determine a second continuous RB number for data transmission for a first cell based on the first continuous RB number, a SCS of the reference cell, and a SCS of the first cell — 604'

Determine a second start RB index value for the data transmission for the first cell based on a bit value indicated by a bit included in a second bit interval corresponding to the first cell in the FDRA field — 605'

FIG. 6B

Determine frequency domain resources for data transmission of a terminal in each of a plurality of cells — 701

Determine a bit value indicated by a bit included in a FDRA field in DCI at least based on frequency domain resources corresponding to a reference cell in the plurality of cells, where the DCI is configured to schedule data transmission for the plurality of cells — 702

Send the DCI to the terminal — 703

FIG. 7

Resource Determining Apparatus

Receiving Module — 801

First Determining Module — 802

Second Determining Module — 803

FIG. 8

Multi-Carrier Scheduling Apparatus

Third Determining Module — 901

Fourth Determining Module — 902

Sending Module — 903

FIG. 9

1000

Memory — 1004

Processing Component — 1002

Communication Component

1018

Power Supply Component — 1006

Processor — 1020

Multimedia Component — 1008

Sensor Component — 1016

Audio Component — 1010

I/O Interface — 1012

FIG. 10

1100

1122

Processing
Component

Wireless
Transmitting/
Receiving
Component

1124

Antenna
Component

1126

FIG. 11

## INTERNATIONAL SEARCH REPORT

| International application No. |
|---|
| **PCT/CN2022/095751** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP, IEEE: 下行控制信息, 频域资源分配, 小区, 共享信道, 带宽部分, DCI, FDRA, cell, PUSCH, PDSCH, BWP

### C. DOCUMENTS CONSIDERED TO BE RELEVANT

| Category* | Citation of document, with indication, where appropriate, of the relevant passages | Relevant to claim No. |
|---|---|---|
| X | CN 113630874 A (VIVO COMMUNICATION TECHNOLOGY CO., LTD.) 09 November 2021 (2021-11-09)<br>description, paragraphs 137-307, and figures 1-7 | 18, 36, 38, 40 |
| X | CN 113630873 A (VIVO COMMUNICATION TECHNOLOGY CO., LTD.) 09 November 2021 (2021-11-09)<br>description, paragraphs 56-147, and figures 1-6 | 18, 36, 38, 40 |
| A | CN 111818646 A (VIVO COMMUNICATION TECHNOLOGY CO., LTD.) 23 October 2020 (2020-10-23)<br>entire document | 1-40 |
| A | CN 112787781 A (RESEARCH INSTITUTE OF CHINA MOBILE COMMUNICATIONS CORP. et al.) 11 May 2021 (2021-05-11)<br>entire document | 1-40 |
| A | US 2021321400 A1 (QUALCOMM INC.) 14 October 2021 (2021-10-14)<br>entire document | 1-40 |

☐ Further documents are listed in the continuation of Box C.　　☑ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| **02 November 2022** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/095751**

| Patent document cited in search report | | | Publication date (day/month/year) | Patent family member(s) | | | Publication date (day/month/year) |
|---|---|---|---|---|---|---|---|
| CN | 113630874 | A | 09 November 2021 | WO | 2021223703 | A1 | 11 November 2021 |
| CN | 113630873 | A | 09 November 2021 | WO | 2021223704 | A1 | 11 November 2021 |
| CN | 111818646 | A | 23 October 2020 | WO | 2021017948 | A1 | 04 February 2021 |
| | | | | CN | 111818646 | B | 24 September 2021 |
| | | | | SG | 11202200879 | A | 25 February 2022 |
| | | | | KR | 20220042411 | A | 05 April 2022 |
| | | | | US | 2022150720 | A1 | 12 May 2022 |
| | | | | EP | 4007408 | A1 | 01 June 2022 |
| | | | | IN | 202227010135 | A | 08 July 2022 |
| | | | | VN | 86498 | A | 25 May 2022 |
| | | | | EP | 4007408 | A4 | 07 September 2022 |
| CN | 112787781 | A | 11 May 2021 | | None | | |
| US | 2021321400 | A1 | 14 October 2021 | WO | 2021207416 | A1 | 14 October 2021 |
| | | | | IN | 202247049140 | A | 16 September 2022 |

Form PCT/ISA/210 (patent family annex) (January 2015)